# EUROPEAN PATENT APPLICATION

(11) **EP 4 258 726 A1**
(43) Date of publication of application: **11.10.2023**
(21) Application number: 21909597.3
(22) Date of filing: 27.12.2021
(51) Int. Cl.: H04W 24/02

(54) **COMMUNICATION METHOD AND APPARATUS**

(30) Priority: 27.12.2020 WO PCT/CN2020/139785; 15.01.2021 CN 202110057999
(71) Applicant: Huawei Technologies Co., Ltd., Shenzhen, Guangdong 518129 (CN)
(72) Inventor: HAO, Jinping, Shenzhen, Guangdong 518129 (CN); JIN, Yinghao, Shenzhen, Guangdong 518129 (CN); WANG, Yi, Shenzhen, Guangdong 518129 (CN)
(74) Representative: Körber, Martin Hans
(86) International application number: PCT/CN2021/141546
(87) International publication number: WO 2022/135602

(57) **Abstract**

This application provides a communication method and apparatus, and relates to the field of wireless communication technologies, to reduce energy consumption of UE. In the method, a terminal device may receive, from an access network device, reference signal configuration information and information about an area that are configured for the terminal device. The terminal device may send a reference signal in the area based on the reference signal configuration information. Based on the foregoing solution, the terminal device may send the reference signal in the area based on the reference signal configuration information, so that the terminal device does not need to access a network to reconfigure the reference signal each time the terminal device moves to a new cell, thereby reducing energy consumption of the terminal device.

## Description

### CROSS-REFERENCE TO RELATED APPLICATIONS

This application claims priority to PCT International Patent Application No. PCT/CN2020/139785, filed with the China National Intellectual Property Administration on December 27, 2020 and entitled "COMMUNATION METHOD AND APPARATUS", which is incorporated herein by reference in its entirety. This application claims priority to Chinese Patent Application No. 202110057999.3, filed with the China National Intellectual Property Administration on January 15, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A positioning service is one of important functions in a new radio (new radio, NR) system. In a current positioning service, user equipment (user equipment, UE) needs to be in a connected state, or needs to receive, when being in a connected state, configuration information of a reference signal configured by a serving cell for the UE, and send a reference signal to the serving cell when being in a connected state.

Currently, if UE that does not have a data service but only sends a reference signal to perform a positioning service keeps in a connected state, energy consumption of the UE is wasted. Therefore, the UE may be released to a non-connected state to send a reference signal. When the UE sends a reference signal in a non-connected state, if the UE moves from a serving cell to a target cell, a reference signal configured by the serving cell for the UE may conflict with an uplink resource of the target cell. Consequently, interference is caused to data transmission in the target cell, and UE positioning may fail. However, each time the UE moves from the serving cell to the target cell, if the UE accesses the target cell and the target cell reconfigures a reference signal for the UE, the UE needs to frequently initiate access, and consequently energy consumption of the UE is high.

### SUMMARY

This application provides a communication method and apparatus, to reduce energy consumption of UE.

According to a first aspect, a communication method is provided. The method may be performed by a terminal device provided in embodiments of this application, or may be performed by a chip with a function similar to that of the terminal device. In the method, the terminal device may receive, from an access network device, reference signal configuration information and information about an area that are configured for the terminal device. The terminal device may send a reference signal in the area based on the reference signal configuration information.

Based on the foregoing solution, the terminal device may send the reference signal in the area based on the reference signal configuration information, so that the terminal device does not need to access a network to reconfigure the reference signal each time the terminal device moves to a new cell, thereby reducing energy consumption of the terminal device. In addition, because the reference signal configuration information may be used in the area, interference caused by collision between a reference signal sent when the terminal device is in a non-connected state, that is, a reference signal sent when the terminal device moves to the new cell and a signal in the new cell can also be avoided.

In a possible implementation, the information about the area may include an identifier of the area, or may include information about at least one cell, for example, may include a list of at least one cell.

Based on the foregoing solution, the terminal device may determine, by using the information about the at least one cell or the identifier of the area, whether a cell on which the terminal device camps is in the area, so that the terminal device does not need to reconfigure the reference signal when moving to the new cell.

In a possible implementation, the terminal device may determine whether a cell on which the terminal device camps is in the area. If the terminal device determines that the cell on which the terminal device camps is in the area, the terminal device may send the reference signal based on the reference signal configuration information.

Based on the foregoing solution, when the cell on which the terminal device camps belongs to the area, the terminal device may send the reference signal based on the reference signal configuration information. When the terminal device moves in the area, the terminal device may not need to access the network to reconfigure the reference signal. This can reduce energy consumption of the terminal device.

In a possible implementation, the terminal device may determine whether the cell on which the terminal device camps is in the area. If the terminal device determines that the cell on which the terminal device camps is not in the area, the terminal device may send a second message to an LMF. Herein, the second message may be used to notify the LMF that the terminal device moves out of the area, or the second message may be used to request to update the reference signal configuration information.

Based on the foregoing solution, the terminal device may receive the reference signal configuration information again when moving out of the area. This can avoid sending the reference signal by using the previously configured reference signal configuration information, and can avoid collision and interference between the sent reference signal and the signal in the new cell.

In a possible implementation, the terminal device may further receive information about a time from the access network device. After receiving the information about the time, the terminal device may start timing. When timing duration does not exceed the time, the terminal device may send the reference signal based on the reference signal configuration information. When the timing duration exceeds the time, the terminal device may send a second message to an LMF. Herein, the second message may be used to notify the LMF that timing expires, or the second message may be used to request to update the reference signal configuration information.

Based on the foregoing solution, the terminal device may determine, based on the information about the time, whether to send the reference signal by using the configured reference signal configuration information. When timing does not expire, the terminal device may send the reference signal based on the configured reference signal configuration information. When timing expires, the terminal device receives the reference signal configuration information again. The terminal device may access the network to reconfigure the reference signal, so as to avoid a resource burden caused to the network when the configuration information is used for a long time.

In a possible implementation, the terminal device may further receive, from the access network device, uplink resource configuration information configured for the terminal device. The terminal device may send a third message in the area based on the uplink resource configuration information. The third message may be used to send uplink data.

Based on the foregoing solution, when the terminal device needs to send the uplink data in the area, the terminal device may send the uplink data in a non-connected state based on the uplink resource configuration information. When the terminal device needs to send a small amount of data to the network, the terminal device may send the data based on the uplink resource configuration information, and does not need to send the data after entering a connected state. This reduces energy consumption of the terminal device.

In a possible implementation, the third message may include a cause, and the cause may indicate a type of the uplink data.

Based on the foregoing solution, the terminal device may send the uplink data by using the third message, and indicate the type of the uplink data, so that the network can process the uplink data based on the cause.

In a possible implementation, the third message may further include a first identifier. The first identifier may identify the LMF.

Based on the foregoing solution, the terminal device may send the uplink data to the LMF by using the first identifier, and may not need to access the network to send the uplink data to the LMF in a connected state by using an LPP message, thereby reducing energy consumption of the terminal device.

In a possible implementation, the third message may further include a NAS message. The NAS message may include an LPPPDU and the first identifier. The LPPPDU may include an LPP message sent to the LMF corresponding to the first identifier.

Based on the foregoing solution, the terminal device may send the uplink data to the LMF in a non-connected state by using the LPP message, and may not need to access the network to send the uplink data, thereby reducing energy consumption of the terminal device.

According to a second aspect, a communication method is provided. The method may be performed by an LMF provided in embodiments of this application, or may be performed by a chip with a function similar to that of the LMF. In the method, the LMF may send a fourth message to an access network device. Herein, the fourth message may be used to request the access network device to determine reference signal configuration information for a terminal device, or the fourth message may be used to request reference signal configuration information of a terminal device. The fourth message may include information about an area, and the area may be an area in which the terminal device sends a reference signal.

Based on the foregoing solution, the LMF may request the access network device to configure, for the terminal device, the reference signal that can be sent in the area, and the terminal device may send the reference signal when moving to a new cell in the area, thereby reducing energy consumption caused because the terminal device frequently accesses a network.

In a possible implementation, the information about the area may include an identifier of the area or information about at least one cell.

Based on the foregoing solution, the area may be identified by the identifier of the area or the information about the at least one cell, so that the terminal device can send the reference signal in the area based on the configured reference signal configuration information, thereby reducing energy consumption of the terminal device.

In a possible implementation, the fourth message may further include information about a time. Duration in which the terminal device sends the reference signal in the area meets the time.

Based on the foregoing solution, the terminal device may send the reference signal based on the configured reference signal configuration information within the time indicated by the information about the time. When the time expires, the terminal device may access the network to reconfigure the reference signal, so as to avoid a resource burden caused to the network when the configuration information is used for a long time.

In a possible implementation, the fourth message may further include indication information. The indication information may indicate to configure a reference signal sent by the terminal device in a non-connected state, or the indication information may indicate that the terminal device has a capability of sending a reference signal in a non-connected state.

Based on the foregoing solution, the access network device may configure, for the terminal device by using the indication information, the reference signal sent in a non-connected state, and may determine the reference signal configuration information.

In a possible implementation, the LMF may receive the reference signal configuration information from the access network device. The reference signal configuration information may include information about the reference signal configured by the access network device for the terminal device.

Based on the foregoing solution, the LMF may learn of the reference signal configuration information of the terminal device, determine, based on the reference signal configuration information, the reference signal that needs to be measured, and indicate the access network device to measure the reference signal sent by the terminal device.

In a possible implementation, the LMF may send the reference signal configuration information to an access network device included in the area.

Based on the foregoing solution, the access network device in the area may learn of the reference signal configuration information of the terminal device, and the access network device may reserve, for the terminal device, a corresponding resource for sending the reference signal, thereby avoiding collision and interference between the reference signal sent by the terminal device and another signal.

In a possible implementation, the fourth message may be further used to request the access network device to configure an uplink resource for the terminal device. The uplink resource may be used by the terminal device to send uplink data.

Based on the foregoing solution, the LMF may request, by using the fourth message, the access network device to configure, for the terminal device, the uplink resource that can be used in the area, so that the terminal device can send the uplink data on the uplink resource in the area, thereby preventing the terminal device from frequently accessing the network to send the uplink data, and reducing energy consumption of the terminal device.

In a possible implementation, the LMF may receive uplink resource configuration information from the access network device. The uplink resource configuration information may include information about the uplink resource configured by the access network device for the terminal device.

Based on the foregoing solution, the LMF may learn of the uplink resource configuration information of the terminal device, and the LMF sends the uplink resource configuration information to another access network device.

In a possible implementation, the LMF may send the uplink resource configuration information to the access network device in the area.

Based on the foregoing solution, the access network device in the area may reserve, for the terminal device, the uplink resource indicated by the uplink resource configuration information, and the access network device in the area may receive, on the resource, the uplink data sent by the terminal device.

According to a third aspect, a communication method is provided. The method may be performed by an access network device provided in embodiments of this application, or may be performed by a chip with a function similar to that of the access network device. In the method, the access network device may receive a fourth message from an LMF. Herein, the fourth message may be used to request the access network device to determine reference signal configuration information for a terminal device, or the fourth message may be used to request reference signal configuration information of a terminal device. The access network device may send, to the terminal device, the reference signal configuration information and information about an area that are configured for the terminal device. The area may be an area in which the terminal device sends a reference signal.

Based on the foregoing solution, the access network device may configure, for the terminal device, the area for sending the reference signal, so that the terminal device can send the reference signal in the area, and the terminal device does not need to access a network when moving to a new cell in the area, thereby reducing energy consumption of the terminal device.

In a possible implementation, the fourth message may include the information about the area.

Based on the foregoing solution, the information about the area may be determined by the LMF and sent to the access network device, and the LMF may determine the area in which the terminal device sends the reference signal.

In a possible implementation, the information about the area may include an identifier of the area, or may include information about at least one cell.

Based on the foregoing solution, the area may be identified by the identifier of the area or the information about the at least one cell, so that the terminal device can send the reference signal in the area based on the configured reference signal configuration information, thereby reducing energy consumption of the terminal device.

In a possible implementation, the access network device may further send information about a time to the terminal device. Duration in which the terminal device sends the reference signal in the area may meet the time.

Based on the foregoing solution, the terminal device may send the reference signal based on the configured reference signal configuration information within the time indicated by the information about the time. When the time expires, the terminal device may access the network to reconfigure the reference signal, so as to avoid a resource burden caused to the network when the configuration information is used for a long time.

In a possible implementation, the access network device may further send a first identifier to the terminal device. The first identifier may identify the LMF.

Based on the foregoing solution, the terminal device may send uplink data to the LMF based on the first identifier, and may not need to access the network to send the uplink data to the LMF in a connected state, thereby reducing energy consumption of the terminal device.

In a possible implementation, the fourth message may include indication information. The indication information may indicate to configure a reference signal sent by the terminal device in a non-connected state, or the indication information may indicate that the terminal device has a capability of sending a reference signal in a non-connected state.

Based on the foregoing solution, the access network device may configure, for the terminal device by using the indication information, the reference signal sent in a non-connected state, and may determine the reference signal configuration information.

In a possible implementation, the access network device may send the reference signal configuration information to the LMF. The reference signal configuration information may include the reference signal configured for the terminal device.

Based on the foregoing solution, the LMF may learn of the reference signal configuration information of the terminal device, determine, based on the reference signal configuration information, the reference signal that needs to be measured, and indicate the access network device to measure the reference signal sent by the terminal device.

In a possible implementation, the access network device may send the reference signal configuration information to an access network device in the area.

Based on the foregoing solution, the access network device in the area may learn of the reference signal configuration information of the terminal device, and the access network device may reserve, for the terminal device, a corresponding resource for sending the reference signal, thereby avoiding collision and interference between the reference signal sent by the terminal device and another signal.

In a possible implementation, the access network device may further send uplink resource configuration information of the terminal device to the terminal device. The uplink resource configuration information may be used by the terminal device to send uplink data in the area.

Based on the foregoing solution, when the terminal device needs to send the uplink data in the area, the terminal device may send the uplink data in a non-connected state based on the uplink resource configuration information. When the terminal device needs to send a small amount of data to the network, the terminal device may send the data based on the uplink resource configuration information, and does not need to send the data after entering a connected state. This reduces energy consumption of the terminal device.

In a possible implementation, the access network device may send the uplink resource configuration information to the LMF.

Based on the foregoing solution, the LMF may learn of the uplink resource configuration information of the terminal device, and the LMF sends the uplink resource configuration information to another access network device.

In a possible implementation, the access network device may send the uplink resource configuration information to the access network device in the area.

Based on the foregoing solution, the access network device in the area may reserve, for the terminal device, the uplink resource indicated by the uplink resource configuration information, and the access network device in the area may receive, on the resource, the uplink data sent by the terminal device.

According to a fourth aspect, a communication method is provided. The method may be performed by a terminal device provided in embodiments of this application, or may be performed by a chip with a function similar to that of the terminal device. In the method, the terminal device may receive a fifth message from an access network device. The fifth message may include uplink resource configuration information and information about an area of the terminal device. The terminal device may send a sixth message in the area based on the uplink resource configuration information. The sixth message may be used to send uplink data.

Based on the foregoing solution, the terminal device may send the uplink data in a non-connected state in the area based on the uplink resource configuration information. This can avoid energy consumption caused because the terminal device accesses a network when the terminal device needs to send data to the network, and can reduce energy consumption of the terminal device.

In a possible implementation, the information about the area may include an identifier of the area, or may include information about at least one cell, for example, may include a list of at least one cell.

Based on the foregoing solution, the terminal device may determine, by using the information about the at least one cell or the identifier of the area, whether a cell on which the terminal device camps is in the area, so that the terminal device does not need to reconfigure a reference signal when moving to a new cell.

In a possible implementation, the terminal device may determine whether a cell on which the terminal device camps is in the area. If the terminal device determines that the cell on which the terminal device camps is in the area, the terminal device may send the sixth message based on the uplink resource configuration information.

Based on the foregoing solution, when the cell on which the terminal device camps belongs to the area, the terminal device may send the uplink data based on the uplink resource configuration information. When the terminal device moves in the area, the terminal device may not need to access the network to reconfigure an uplink resource. This can reduce energy consumption of the terminal device.

In a possible implementation, the terminal device may determine whether the cell on which the terminal device camps is in the area. If the terminal device determines that the cell on which the terminal device camps is not in the area, the terminal device may send a seventh message to an LMF. The seventh message may be used to notify the LMF that the terminal device moves out of the area, or the seventh message may be used to request to update the uplink resource configuration information.

Based on the foregoing solution, the terminal device may receive the uplink resource configuration information again when moving out of the area. This can avoid sending the uplink data by using the previously configured uplink resource configuration information, and can avoid collision and interference between the sent uplink data and a signal in the new cell.

In a possible implementation, the fifth message may further include information about a time. After receiving the fifth message, the terminal device may start timing. When timing duration does not exceed the time, the terminal device may send the sixth message based on the uplink resource configuration information. When the timing duration exceeds the time, the terminal device may send a seventh message to an LMF. Herein, the seventh message may be used to notify the LMF that timing expires, or the seventh message may be used to request to update the reference signal configuration information.

Based on the foregoing solution, the terminal device may determine, based on the information about the time, whether to send the uplink resource by using the configured uplink resource configuration information. When timing does not expire, the terminal device may send the uplink data based on the configured uplink resource configuration information. When timing expires, the terminal device receives the uplink resource configuration information again. This can avoid a resource burden caused to the network when the configuration information is used for a long time.

In a possible implementation, the sixth message may include a cause, and the cause may indicate a type of the uplink data.

Based on the foregoing solution, the terminal device may send the uplink data by using the sixth message, and indicate the type of the uplink data, so that the network can process the uplink data based on the cause.

In a possible implementation, the sixth message may further include a first identifier. The first identifier may identify the LMF.

Based on the foregoing solution, the terminal device may send the uplink data to the LMF by using the first identifier, and may not need to access the network to send the uplink data to the LMF in a connected state by using an LPP message, thereby reducing energy consumption of the terminal device.

In a possible implementation, the sixth message may further include a NAS message. The NAS message may include an LPPPDU and the first identifier. The LPPPDU may include an LPP message sent to the LMF corresponding to the first identifier.

Based on the foregoing solution, the terminal device may send the uplink data to the LMF in a non-connected state by using the LPP message, and may not need to access the network to send the uplink data, thereby reducing energy consumption of the terminal device.

According to a fifth aspect, a communication method is provided. The method may be performed by an LMF provided in embodiments of this application, or may be performed by a chip with a function similar to that of the LMF. In the method, the LMF may send an eighth message to an access network device. The eighth message may be used to request the access network device to configure an uplink resource for a terminal device. The eighth message may include information about an area, and the area may be an area in which the terminal device sends uplink data.

Based on the foregoing solution, the LMF may request the access network device to configure, for the terminal device, the uplink resource that can be used to send the uplink data in the area, and when moving to a new cell in the area, the terminal device may send the uplink data by using the uplink resource, thereby reducing energy consumption caused because the terminal device frequently accesses a network.

In a possible implementation, the information about the area may include an identifier of the area or information about at least one cell.

Based on the foregoing solution, the area may be identified by the identifier of the area or the information about the at least one cell, so that the terminal device can send the uplink data in the area based on configured uplink resource configuration information, thereby reducing energy consumption of the terminal device.

In a possible implementation, the eighth message may further include information about a time. Duration in which the terminal device sends the uplink data in the area based on the uplink resource meets the time.

Based on the foregoing solution, the terminal device may send a reference signal based on the configured uplink resource configuration information within the time indicated by the information about the time. When the time expires, the terminal device may access the network to reconfigure the reference signal, so as to avoid a resource burden caused to the network when the configuration information is used for a long time.

In a possible implementation, the eighth message may further include indication information. The indication information may indicate to configure an uplink resource for sending uplink data by the terminal device in a non-connected state, or the indication information may indicate that the terminal device has a capability of sending uplink data in a non-connected state.

Based on the foregoing solution, the access network device may configure, for the terminal device by using the indication information, the uplink resource for sending the uplink data in a non-connected state, and may determine the uplink resource configuration information.

In a possible implementation, the LMF may receive uplink resource configuration information from the access network device. The uplink resource configuration information may include information about the uplink resource configured by the access network device for the terminal device.

Based on the foregoing solution, the LMF may learn of the uplink resource configuration information of the terminal device, and the LMF sends the uplink resource configuration information to another access network device.

In a possible implementation, the LMF may send the uplink resource configuration information to an access network device in the area.

Based on the foregoing solution, the access network device in the area may reserve, for the terminal device, the uplink resource indicated by the uplink resource configuration information, and the access network device in the area may receive, on the resource, the uplink data sent by the terminal device.

According to a sixth aspect, a communication method is provided. The method may be performed by an access network device provided in embodiments of this application, or may be performed by a chip with a function similar to that of the access network device. In the method, the access network device may receive an eighth message from an LMF. The access network device may send a fifth message to a terminal device. The fifth message may include uplink resource configuration information and information about an area of the terminal device. The area may be an area in which the terminal device sends uplink data based on the uplink resource configuration information.

Based on the foregoing solution, the access network device may configure, for the terminal device, the area for sending the uplink data, so that the terminal device can send the uplink data in the area, and the terminal device does not need to access a network when moving to a new cell in the area, thereby reducing energy consumption of the terminal device.

In a possible implementation, the eighth message may include the information about the area.

Based on the foregoing solution, the information about the area may be determined by the LMF and sent to the access network device, and the LMF may determine the area in which the terminal device sends a reference signal.

In a possible implementation, the information about the area may include an identifier of the area, or may include information about at least one cell.

Based on the foregoing solution, the area may be identified by the identifier of the area or the information about the at least one cell, so that the terminal device can send the reference signal in the area based on the configured reference signal configuration information, thereby reducing energy consumption of the terminal device.

In a possible implementation, the fifth message may further include information about a time. Duration in which the terminal device sends the uplink data in the area based on the uplink resource configuration information may meet the time.

Based on the foregoing solution, the terminal device may send the uplink data based on the configured uplink resource configuration information within the time indicated by the information about the time. When the time expires, the terminal device may access the network to reconfigure the reference signal, so as to avoid a resource burden caused to the network when the configuration information is used for a long time.

In a possible implementation, the fifth message may further include a first identifier. The first identifier may identify the LMF.

Based on the foregoing solution, the terminal device may send the uplink data to the LMF based on the first identifier, and may not need to access the network to send the uplink data to the LMF in a connected state, thereby reducing energy consumption of the terminal device.

In a possible implementation, the eighth message may include indication information. The indication information may indicate to configure an uplink resource for sending uplink data by the terminal device in a non-connected state, or the indication information may indicate that the terminal device has a capability of sending uplink data in a non-connected state.

Based on the foregoing solution, the access network device may configure, for the terminal device by using the indication information, the uplink resource for sending the uplink data in a non-connected state, and may determine the uplink resource configuration information.

In a possible implementation, the access network device may send the uplink resource configuration information to the LMF.

Based on the foregoing solution, the LMF may learn of the uplink resource configuration information of the terminal device, and the LMF sends the uplink resource configuration information to another access network device.

In a possible implementation, the access network device may send the uplink resource configuration information to an access network device in the area.

Based on the foregoing solution, the access network device in the area may reserve, for the terminal device, the uplink resource indicated by the uplink resource configuration information, and the access network device in the area may receive, on the resource, the uplink data sent by the terminal device.

According to a seventh aspect, a communication apparatus is provided. The communication apparatus may include modules/units configured to perform any one of the first aspect or the possible implementations of the first aspect, or may include modules/units configured to perform any one of the second aspect or the possible implementations of the second aspect, or may include modules/units configured to perform any one of the third aspect or the possible implementations of the third aspect, or may include modules/units configured to perform any one of the fourth aspect or the possible implementations of the fourth aspect, or may include modules/units configured to perform any one of the fifth aspect or the possible implementations of the fifth aspect, or may include modules/units configured to perform any one of the sixth aspect or the possible implementations of the sixth aspect. For example, the communication apparatus includes a communication unit and a processing unit.

For example, when the communication apparatus performs the method in any one of the first aspect or the possible implementations of the first aspect, the communication unit is configured to receive, from an access network device, reference signal configuration information and information about an area that are configured for the apparatus. The processing unit is configured to determine whether the apparatus is in the area. The communication unit is further configured to send a reference signal in the area based on the reference signal configuration information.

In a design, the information about the area includes an identifier of the area or information about at least one cell.

In a design, when determining whether the apparatus is in the area, the processing unit is specifically configured to determine whether a cell on which the apparatus camps is in the area. When sending the reference signal in the area based on the reference signal configuration information, the communication unit is specifically configured to: if the cell on which the apparatus camps is in the area, send the reference signal based on the reference signal configuration information.

In a design, when determining whether the apparatus is in the area, the processing unit is specifically configured to determine whether the cell on which the apparatus camps is in the area. When sending the reference signal in the area based on the reference signal configuration information, the communication unit is specifically configured to: if the cell on which the apparatus camps is not in the area, send a second message to a location management function LMF. The second message is used to notify the LMF that the apparatus moves out of the area, or the second message is used to request to update the reference signal configuration information.

In a design, the communication unit is further configured to receive information about a time from the access network device. The processing unit is further configured to start timing after the communication unit receives the information about the time. The communication unit is further configured to: if timing duration does not exceed the time, send the reference signal based on the reference signal configuration information; or if the timing duration exceeds the time, send a second message to an LMF. The second message is used to notify the LMF that timing expires, or the second message is used to request to update the reference signal configuration information.

In a design, the communication unit is further configured to receive, from the access network device, uplink resource configuration information configured for the apparatus. The processing unit is further configured to determine whether the apparatus is in the area. The communication unit is further configured to send a third message in the area based on the uplink resource configuration information. The third message is used to send uplink data.

In a design, the third message includes a cause. The cause indicates a type of the uplink data.

In a design, the communication unit is further configured to receive a first identifier from the access network device. The first identifier identifies the LMF.

In a design, the third message further includes a non-access stratum message. The non-access stratum message includes a long term evolution positioning protocol protocol data unit LPP PDU and the first identifier. The LPP PDU includes an LPP message sent to the LMF corresponding to the first identifier.

For example, when the communication apparatus performs the method in any one of the second aspect or the possible implementations of the second aspect, the processing unit is configured to generate a fourth message. The communication unit is configured to send the fourth message to an access network device. The fourth message is used to request the access network device to determine reference signal configuration information for a terminal device, or is used to request reference signal configuration information of a terminal device. The fourth message includes information about an area, and the area is an area in which the terminal device sends a reference signal.

In a design, the information about the area includes an identifier of the area or information about at least one cell.

In a design, the fourth message further includes information about a time. Duration in which the terminal device sends the reference signal in the area meets the time.

In a design, the fourth message further includes indication information. The indication information indicates to configure a reference signal sent by the terminal device in a non-connected state; or the indication information indicates that the terminal device has a capability of sending a reference signal in a non-connected state.

In a design, the communication unit is further configured to receive the reference signal configuration information from the access network device. The reference signal configuration information includes information about the reference signal configured by the access network device for the terminal device.

In a design, the communication unit is further configured to send the reference signal configuration information to an access network device included in the area.

In a design, the fourth message is further used to request the access network device to configure an uplink resource for the terminal device. The uplink resource is used by the terminal device to send uplink data.

In a design, the communication unit is further configured to receive uplink resource configuration information from the access network device. The uplink resource configuration information includes information about the uplink resource configured by the access network device for the terminal device.

In a design, the communication unit is further configured to send the uplink resource configuration information to the access network device in the area.

For example, when the communication apparatus performs the method in any one of the third aspect or the possible implementations of the third aspect, the communication unit is configured to receive a fourth message from a location management function LMF. The fourth message is used to request the access network device to determine reference signal configuration information for a terminal device, or is used to request reference signal configuration information of a terminal device. The processing unit determines the reference signal configuration information and information about an area of the terminal device. The communication unit is further configured to send the reference signal configuration information and the information about the area to the terminal device. The area is an area in which the terminal device sends a reference signal.

In a design, the fourth message includes the information about the area.

In a design, the information about the area includes an identifier of the area or information about at least one cell.

In a design, the communication unit is further configured to send information about a time. Duration in which the terminal device sends the reference signal in the area meets the time.

In a design, the communication unit is further configured to send a first identifier. The first identifier identifies the LMF.

In a design, the fourth message includes indication information. The indication information indicates to configure a reference signal sent by the terminal device in a non-connected state; or the indication information indicates that the terminal device has a capability of sending a reference signal in a non-connected state.

In a design, the communication unit is further configured to send the reference signal configuration information to the LMF. The reference configuration information includes the reference signal configured for the terminal device.

In a design, the communication unit is further configured to send the reference signal configuration information to an access network device in the area.

In a design, the communication unit is further configured to send uplink resource configuration information of the terminal device. The uplink resource configuration information is used by the terminal device to send uplink data in the area.

In a design, the communication unit is further configured to send the uplink resource configuration information to the LMF.

In a design, the communication unit is further configured to send the uplink resource configuration information to the access network device in the area.

For example, when the communication apparatus performs the method in any one of the fourth aspect or the possible implementations of the fourth aspect, the communication unit is configured to receive a fifth message from an access network device. The fifth message may include uplink resource configuration information and information about an area of the apparatus. The processing unit is configured to determine whether the apparatus is in the area. The communication unit is further configured to send a sixth message in the area based on the uplink resource configuration information. The sixth message may be used to send uplink data.

In a design, the information about the area may include an identifier of the area, or may include information about at least one cell.

In a design, when determining whether the apparatus is in the area, the processing unit determines whether a cell on which the apparatus camps is in the area. When sending the sixth message in the area based on the uplink resource configuration information, the communication unit is specifically configured to: if the processing unit determines that the cell on which the apparatus camps is in the area, send the sixth message based on the uplink resource configuration information.

In a design, when determining whether the apparatus is in the area, the processing unit determines whether the cell on which the apparatus camps is in the area. When sending the sixth message in the area based on the uplink resource configuration information, the communication unit is specifically configured to: if the processing unit determines that the cell on which the apparatus camps is not in the area, send a seventh message to an LMF. The seventh message may be used to notify the LMF that the apparatus moves out of the area, or the seventh message may be used to request to update the uplink resource configuration information.

In a design, the fifth message may further include information about a time. The processing unit is further configured to start timing after the fifth message is received. The communication unit is further configured to: when timing duration does not exceed the time, send the sixth message based on the uplink resource configuration information; or the communication unit is further configured to send a seventh message to an LMF when the timing duration exceeds the time. Herein, the seventh message may be used to notify the LMF that timing expires, or the seventh message may be used to request to update the reference signal configuration information.

In a design, the sixth message may include a cause, and the cause may indicate a type of the uplink data.

In a design, the sixth message may further include a first identifier. The first identifier may identify the LMF.

In a design, the sixth message may further include a NAS message. The NAS message may include an LPP PDU and the first identifier. The LPP PDU may include an LPP message sent to the LMF corresponding to the first identifier.

For example, when the communication apparatus performs the method in any one of the fifth aspect or the possible implementations of the fifth aspect, the processing unit is configured to generate an eighth message. The communication unit is configured to send the eighth message to an access network device. The eighth message may be used to request the access network device to configure an uplink resource for a terminal device. The eighth message may include information about an area, and the area may be an area in which the terminal device sends uplink data.

In a design, the information about the area may include an identifier of the area or information about at least one cell.

In a design, the eighth message may further include information about a time. Duration in which the terminal device sends the uplink data in the area based on the uplink resource meets the time.

In a design, the eighth message may further include indication information. The indication information may indicate to configure an uplink resource for sending uplink data by the terminal device in a non-connected state, or the indication information may indicate that the terminal device has a capability of sending uplink data in a non-connected state.

In a design, the communication unit is further configured to receive uplink resource configuration information from the access network device. The uplink resource configuration information may include information about the uplink resource configured by the access network device for the terminal device.

In a design, the communication unit is further configured to send the uplink resource configuration information to an access network device in the area.

For example, when the communication apparatus performs the method in any one of the sixth aspect or the possible implementations of the sixth aspect, the communication unit is configured to receive an eighth message from an LMF. The processing unit is configured to determine a fifth message. The communication unit is further configured to send the fifth message to a terminal device. The fifth message may include uplink resource configuration information and information about an area of the terminal device. The area may be an area in which the terminal device sends uplink data based on the uplink resource configuration information.

In a design, the eighth message may include the information about the area.

In a design, the information about the area may include an identifier of the area, or may include information about at least one cell.

In a design, the fifth message may further include information about a time. Duration in which the terminal device sends the uplink data in the area based on the uplink resource configuration information may meet the time.

In a design, the fifth message may further include a first identifier. The first identifier may identify the LMF.

In a design, the eighth message may include indication information. The indication information may indicate to configure an uplink resource for sending uplink data by the terminal device in a non-connected state, or the indication information may indicate that the terminal device has a capability of sending uplink data in a non-connected state.

In a design, the communication unit is further configured to send the uplink resource configuration information to the LMF.

In a design, the communication unit is further configured to send the uplink resource configuration information to an access network device in the area.

According to an eighth aspect, a communication apparatus is provided. The communication apparatus includes a processor and a transceiver. The transceiver is configured to perform the sending and receiving steps of the method in any one of the first aspect or the possible implementations of the first aspect, or perform the sending and receiving steps of the method in any one of the second aspect or the possible implementations of the second aspect, or perform the sending and receiving steps of the method in any one of the third aspect or the possible implementations of the third aspect, or perform the sending and receiving steps of the method in any one of the fourth aspect or the possible implementations of the fourth aspect, or perform the sending and receiving steps of the method in any one of the fifth aspect or the possible implementations of the fifth aspect, or perform the operation steps of the method in any one of the sixth aspect or the possible implementations of the sixth aspect. The processor is configured to perform the operation steps of the method in any one of the first aspect or the possible implementations of the first aspect, or perform the operation steps of the method in any one of the second aspect or the possible implementations of the second aspect, or perform the operation steps of the method in any one of the third aspect or the possible implementations of the third aspect, or perform the operation steps of the method in any one of the fourth aspect or the possible implementations of the fourth aspect, or perform the operation steps of the method in any one of the fifth aspect or the possible implementations of the fifth aspect, or perform the operation steps of the method in any one of the sixth aspect or the possible implementations of the sixth aspect.

In a possible implementation, the apparatus further includes a memory. The memory is configured to store computer executable instructions. When a controller runs, the processor executes the computer executable instructions in the memory, to perform the methods in the foregoing aspects by using a hardware resource in the controller.

In a possible implementation, the memory may be located inside the apparatus, or the memory may be located outside the apparatus.

In a possible implementation, the memory and the processor may be integrated.

According to a ninth aspect, a communication system is provided. The communication system may include at least one access network device and at least one LMF. The at least one LMF may perform the operations shown in the second aspect and the fifth aspect, and the at least one access network device may perform the operations shown in the third aspect and the sixth aspect. For example, the at least one LMF sends a fourth message to the at least one access network device. The fourth message is used to request the access network device to determine reference signal configuration information for a terminal device, or the fourth message may be used to request reference signal configuration information of a terminal device. The fourth message may include information about an area. The area is an area in which the terminal device sends a reference signal. The at least one access network device may send, to the terminal device, the reference signal configuration information and the information about the area that are configured for the terminal device.

According to a tenth aspect, this application provides a computer-readable storage medium. The computer-readable storage medium stores instructions, and when the instructions are run on a computer, the computer is enabled to perform the methods in the foregoing aspects.

According to an eleventh aspect, this application provides a computer program product storing instructions. When the computer program product is run on a computer, the computer is enabled to perform the methods in the foregoing aspects.

In addition, for beneficial effects of the seventh aspect to the eleventh aspect, refer to the beneficial effects shown in the first aspect to the sixth aspect.

### BRIEF DESCRIPTION OF DRAWINGS

FIG. 1 shows a communication system according to an embodiment of this application;
FIG. 2 is one of example flowcharts of a communication method according to an embodiment of this application;
FIG. 3 is a schematic diagram of an area according to an embodiment of this application;
FIG. 4 is one of example flowcharts of a communication method according to an embodiment of this application;
FIG. 5 is one of example flowcharts of a communication method according to an embodiment of this application;
FIG. 6 is one of example flowcharts of a communication method according to an embodiment of this application;
FIG. 7 is one of example flowcharts of a communication method according to an embodiment of this application;
FIG. 8A and FIG. 8B are one of example flowcharts of a communication method according to an embodiment of this application;
FIG. 9 is one of schematic diagrams of a communication apparatus according to an embodiment of this application;
FIG. 10 is one of schematic diagrams of a communication apparatus according to an embodiment of this application; and
FIG. 11 is a schematic diagram of a terminal device according to an embodiment of this application.

### DESCRIPTION OF EMBODIMENTS

Currently, a positioning service is one of important functions in an NR system. When an initiator initiates the positioning service, a location management function (location management function, LMF) may request a serving cell of UE to configure a sounding reference signal (sounding reference signal, SRS) for the UE. The UE is in a connected state when receiving SRS configuration information configured by the serving cell for the UE. The UE may send an SRS based on the SRS configuration information, and a measurement base station measures the SRS sent by the UE to obtain a measurement amount, and reports the measurement amount to the LMF. The LMF may obtain a location of the UE through calculation based on the measurement amount, and feed back the location to the initiator. When the UE is handed over from the serving cell to a destination cell, the UE needs to initiate access to a base station that manages the destination cell, and when being in a connected state, the UE receives the SRS configuration information from the serving cell. That is, in the current positioning service, the UE needs to be in a connected state to receive the SRS configuration information, so as to implement positioning of the UE.

However, if UE that does not have a data service but only sends an SRS to perform a positioning service keeps in a connected state, energy consumption of the UE is wasted. Therefore, the UE may be released to a non-connected state to send the SRS. When the UE sends the SRS in a non-connected state, if the UE moves from a serving cell to a destination cell, an SRS configured by the serving cell for the UE may conflict with an uplink resource of the destination cell. Consequently, interference is caused to data transmission in the destination cell, and UE positioning may fail. However, each time the UE moves from the serving cell to the destination cell, if the UE accesses the destination cell and receives SRS configuration information from the destination cell, the UE needs to frequently initiate access, and consequently energy consumption of the UE is high.

In addition, if the UE wants to send information to the LMF when the UE is in a non-connected state, the UE needs to enter a connected state and then send the information to the LMF by using a long term evolution positioning protocol (long term evolution positioning protocol, LPP) message. When the UE needs to send a small amount of information to the LMF, such an information transmission manner wastes energy consumption of the UE.

Based on the foregoing problem, embodiments of this application provide a communication method and apparatus. In the method, a base station may configure a reference signal and information about an area for UE. The UE may send the reference signal in the area based on reference signal configuration information. Therefore, when cell handover occurs on the UE, the UE may not need to enter a connected state to receive SRS configuration information, but may send an SRS in an area based on information about the area that is configured by the base station for the UE, thereby reducing energy consumption of the UE.

The following describes some terms in embodiments of this application, to help a person skilled in the art have a better understanding.

The terms "system" and "network" in embodiments of this application may be used interchangeably. The term "a plurality of" means two or more, and other quantifiers are similar. The term "and/or" describes an association relationship for describing associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of) ..." means one or any combination of subsequent associated objects. For example, "at least one of A, B, and C" includes A, B, C, AB, AC, BC, or ABC.

The technical solutions in embodiments of this application may be applied to a conventional typical network, or may be applied to a future UE-centric (UE-centric) network. Embodiments of this application may be applied to various communication systems, for example, a long term evolution (long term evolution, LTE) system, a worldwide interoperability for microwave access (worldwide interoperability for microwave access, WiMAX) communication system, a future fifth-generation (5th Generation, 5G) system such as a new radio access technology (new radio access technology, NR), and a future communication system such as a 6G system.

All aspects, embodiments, or features are presented in this application by describing a system that may include a plurality of devices, components, modules, and the like. It should be understood that each system may include another device, component, module, and the like, and/or may not include all devices, components, modules, and the like discussed with reference to the accompanying drawings. In addition, a combination of these solutions may also be used.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

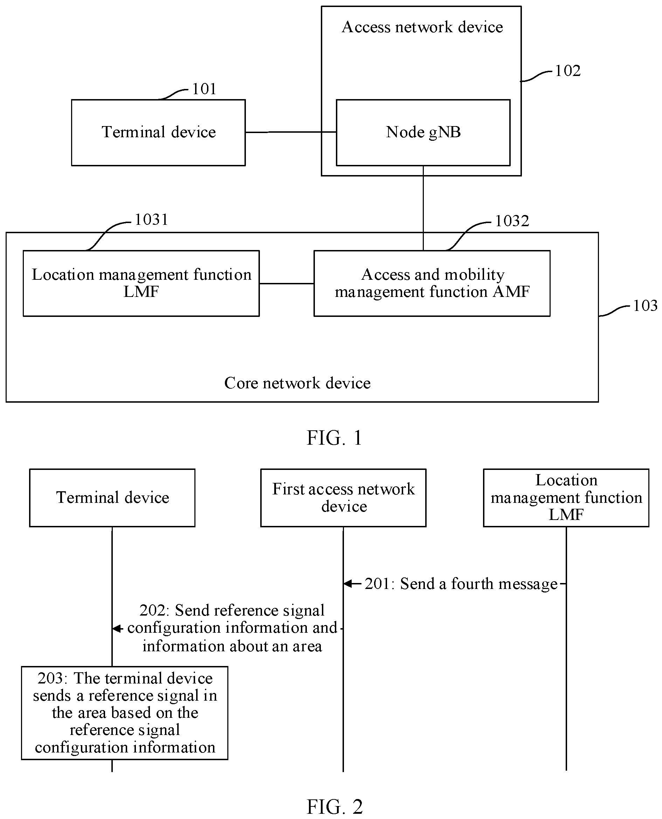

For ease of understanding of embodiments of this application, a communication system applicable to embodiments of this application is first described in detail by using a communication system shown in FIG. 1 as an example. FIG. 1 is a schematic diagram of a communication system applicable to a communication method according to an embodiment of this application. As shown in FIG. 1, the communication system 100 includes a terminal device 101, an access network device 102, and a core network device 103. The core network device 103 may include an LMF 1031 and an access and mobility management function 1032 (access and mobility management function, AMF). The LMF 1031 may request the access network device 102 to configure a reference signal for the terminal device 101. The access network device 102 may configure the reference signal and information about an area for the terminal device 101, so that the terminal device 101 can send the reference signal in the area. The LMF 1031 may select an access network device as a measurement access network device. It should be understood that the measurement access network device may be the access network device 102, or may be an access network device other than the access network device 102, which is not shown in the figure. The measurement access network device measures the reference signal sent by the terminal device 101, and reports a measurement amount to the LMF 1031. The LMF 1031 may obtain location information of the UE through calculation based on the measurement amount.

The following describes each network element in the communication system.

The following describes in detail a function of each network element or device in the communication system in embodiments of this application.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device with a wireless connection function or a vehicle-mounted device. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. In FIG. 1, the terminal device is shown by using UE as an example, and the terminal device is not limited.

The access network (access network, AN) device provides a radio access service for the terminal device. The access network device is a device that enables the terminal device to access a wireless network in the communication system. The access network device is a node in a radio access network, and may also be referred to as a base station or a radio access network (radio access network, RAN) node (or device). Currently, some examples of the access network device are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, wifi) access point (access point, AP), and the like.

The access and mobility management function AMF may be configured to manage access control and mobility of the terminal device. In actual application, the access and mobility management function includes a mobility management function of a mobility management entity (mobility management entity, MME) in a network framework in long term evolution (long term evolution, LTE), and further includes an access management function. Specifically, the access and mobility management function may be responsible for registration of the terminal device, mobility management, a tracking area update procedure, reachability detection, selection of a session management function, mobility state transition management, and the like. For example, in 5G, the access and mobility management function may be an AMF (access and mobility management function), for example, as shown in FIG. 1. In future communication, for example, in 6G, the access and mobility management function may still be an AMF or have another name. This is not limited in this application. When the access and mobility management function is an AMF, the AMF may provide an Namf service.

The location management function LMF may be configured to determine a location of the UE, obtain downlink location measurement or location estimation from the UE, and the like. For example, in 5G, the location management function (location management function, LMF) is shown in FIG. 1. In a future communication system, for example, in 6G, the location management function may still be an LMF or have another name. This is not limited in this application.

FIG. 2 is an example flowchart of a communication method according to an embodiment of this application. The method may include the following steps.

Step 201: An LMF sends a fourth message to a first access network device.

The fourth message herein may be a positioning information request (positioning information request) message, or may be a newly defined message. The fourth message may be used to request the first access network device to configure a reference signal for a terminal device, and/or the fourth message may be used to request reference signal configuration information of a terminal device. The reference signal may be a sounding reference signal (sounding reference signal, SRS). Optionally, the fourth message may further include one or more of Example 1 to Example 3.

Without loss of generality, an example in which the reference signal of the terminal device is an SRS is used for description below. It should be understood that the reference signal in this embodiment of this application may alternatively be a reference signal other than the SRS.

### Example 1: Information about an area.

The area herein may be that the terminal device may send the configured SRS in a non-connected state in the area, and may not need to enter a connected state to receive the SRS configuration information again when moving to another cell. It should be understood that the non-connected state in this embodiment of this application may include an inactive (inactive) state and an idle (idle) state. For example, if the area includes a cell 1, a cell 2, and a cell 3, the terminal device may send the configured SRS in a non-connected state within the cell 1, the cell 2, and the cell 3.

The area may be determined by the LMF based on a first access network device that is providing a service for the terminal device. For example, the LMF may determine a first access network device that is currently providing a service for the terminal device, and determine a neighboring access network device of the first access network device. The LMF may determine a cell managed by the first access network device and a cell managed by the neighboring access network device as one area. Alternatively, the LMF may determine a first access network device that is currently providing a service for the terminal device, and determine all or some access network devices that have Xn interfaces with the first access network device. The LMF may determine a cell managed by the first access network device and cells managed by the all or some access network devices that have Xn interfaces as one area. Alternatively, the LMF may determine a cell on which the terminal device currently camps, and obtain neighboring cell information of the cell. The LMF may determine the cell on which the terminal device currently camps and a neighboring cell of the cell as one area.

In an example, the information about the area may be an identifier of the area. Optionally, the identifier may be associated with a list, and the list may be a cell list. The cell list may include identifiers of one or more cells, and the area may be formed by the one or more cells. Alternatively, the identifier may be associated with one piece of geographical location information, for example, may be associated with one administrative area, and the area may be formed by a geographical location indicated by the geographical location information. Alternatively, the identifier may be associated with an area covered by at least one access network device. An access network device in the area may broadcast an identifier of a same area. The identifier of the area that is broadcast by the access network device in the area may be sent by the LMF to the access network device, and the access network device may perform broadcast based on the identifier of the area that is sent by the LMF. Alternatively, the identifier of the area may be determined by an access network device. For example, the identifier of the area may be preconfigured by an OAM for the access network device, and the access network device may perform broadcast based on the configuration of the OAM.

In another example, the information about the area may be a cell list. The cell list may include identifiers of one or more cells, and the area may be formed by the one or more cells.

In this embodiment of this application, the information about the area may alternatively be other information that may indicate an area. This is not specifically limited in this application. For example, the information about the area may alternatively be an identifier list of the first access network device, and the area may be formed by a cell managed by the first access network device.

Optionally, each cell may be associated with one piece of frequency information in the information about the area, and the terminal device may determine, based on the frequency information, whether to send an SRS in the area. For example, if a cell that is not associated with frequency information exists in cells included in the area, even if the cell that is not associated with frequency information belongs to the area, when the terminal device camps on the cell that is not associated with frequency information, the terminal device needs to enter a connected state to request a network side to update the SRS configuration information. In addition, when the terminal device camps on a cell, if the cell belongs to the foregoing area and is associated with frequency information, the terminal device may determine whether a frequency of the configured SRS meets the frequency information associated with the cell. If the frequency of the configured SRS meets the frequency information associated with the cell, the terminal device may send the configured SRS in a non-connected state within the cell. If the frequency of the configured SRS does not meet the frequency information associated with the cell, the terminal device needs to enter a connected state to request the network side to update the SRS configuration information.

It should be noted that the information about the area may alternatively be specified in a communication protocol. The LMF may obtain information about a first access network device that is providing a service for the terminal device or information about a cell on which the terminal device currently camps, and determine, based on the information about the first access network device or the information about the cell on which the terminal device currently camps, the information about the area that is specified in the communication protocol.

### Example 2: Information about a time.

The time indicated by the information about the time herein may be a time at which the terminal device may send the configured SRS in a non-connected state. The information about the time may be duration, or may be a timer. Timing duration of the timer may be duration in which the terminal device sends the configured SRS in a non-connected state. Alternatively, the information about the time may be a time point. For example, the information about the time may be one time point. The time point indicates that the terminal device may send the configured SRS in a non-connected state before the time point arrives, and the terminal device cannot continue to send the configured SRS in a non-connected state when the time point arrives. Alternatively, the information about the time may be two points. The terminal device may send the configured SRS in a non-connected state when a first time point arrives, and the terminal device cannot continue to send the configured SRS in a non-connected state when a second time point arrives.

It should be understood that the information about the time in this embodiment of this application may alternatively be other information that may indicate a time. That the terminal device sends the configured SRS in a non-connected state may meet the time.

### Example 3: First indication information.

The first indication information may indicate to configure a reference signal sent by the terminal device in a non-connected state, or the first indication information may indicate that the terminal device has a capability of sending a reference signal in a non-connected state.

In an example, the first indication information may trigger the first access network device to release the terminal device to a non-connected state and configure, for the terminal device, an SRS sent in a non-connected state. When receiving the first indication information, the first access network device may release the terminal device to a non-connected state. The first access network device may configure, for the terminal device, the SRS sent in a non-connected state. For example, the first access network device may configure a time domain resource and a frequency domain resource of the SRS for the terminal device. The first access network device may add the SRS configuration information to a radio resource control (radio resource control, RRC) release (release) message.

In another example, the first indication information may trigger the first access network device to configure the terminal device to continue to send an SRS after the terminal device enters a non-connected state. The first access network device may determine to release the terminal to a non-connected state. For example, when the terminal device has no data service within a specific time, the first access network device releases the terminal device to a non-connected state. The first access network device may add the SRS configuration information to an RRC release message, to release the terminal device to a non-connected state and configure the terminal device to continue to send the SRS. Alternatively, before releasing the terminal device to a non-connected state, the first access network device sends the SRS configuration information to the terminal device by using an RRC message, for example, an RRC reconfiguration (reconfiguration) message. In addition, when the first access network device sends the RRC release message to the terminal to release the terminal device to a non-connected state, the RRC release message carries second indication information, and the second indication information may indicate the terminal device to continue to send the SRS in a non-connected state.

Step 202: The first access network device sends the reference signal configuration information and the information about the area to the terminal device.

The first access network device may release the terminal device to a non-connected state based on the first indication information in Example 3. Alternatively, the first access network device may release the terminal device to a non-connected state when the terminal device has no data service within a specific time. The first access network device may release the terminal device to a non-connected state by using an RRC release message. Optionally, the RRC release message may carry second indication information, and the second indication information may indicate the terminal device to send an SRS in a non-connected state.

In a possible implementation, the first access network device may send the reference signal configuration information and the information about the area to the terminal device by using one message. For example, the first access network device may send the reference signal configuration information and the information about the area to the terminal device by using a first message. In an example, the first message may be an RRC release message. When determining that the terminal device needs to be released to a non-connected state, the first access network device sends the RRC release message to the terminal device. The first access network device may add the SRS configuration information and the information about the area to the RRC release message

In another example, the first message may be an RRC reconfiguration message. The first access network device may add the SRS configuration information and the information about the area to the RRC reconfiguration message. When determining that the terminal device needs to be released to a non-connected state, the first access network device sends an RRC release message to the terminal device, to release the terminal device to a non-connected state.

Based on the foregoing solution, the first access network device may send the reference signal configuration information and the information about the area to the terminal device by using the first message, so that signaling overheads can be reduced.

In another possible implementation, the first access network device may send the reference signal configuration information and the information about the area to the terminal device by using two messages. It should be understood that, when the first access network device may send the reference signal configuration information and the information about the area to the terminal device by using two messages, the first access network device may simultaneously send a message that carries the reference signal configuration information and a message that carries the information about the area, or may send a message that carries the reference signal configuration information before a message that carries the information about the area, or may send a message that carries the information about the area before a message that carries the reference signal configuration information.

In an example, the first access network device may send the SRS configuration information to the terminal device by using an RRC reconfiguration message. When determining that the terminal device needs to be released to a non-connected state, the first access network device sends an RRC release message that carries the information about the area to the terminal device, to release the terminal device to a non-connected state.

In another example, when determining that the terminal device needs to be released to a non-connected state, the first access network device sends an RRC release message that carries the SRS configuration information to the terminal device, to release the terminal device to a non-connected state. The terminal device may send the information about the area to the terminal device by using an RRC reconfiguration message.

Based on the foregoing solution, the first access network device may separately send the reference signal configuration information and the information about the area to the terminal device, and the first access network device may send the information about the area to the terminal device when determining that the terminal device requires the information about the area. This can reduce transmission resources.

The RRC release message or the RRC reconfiguration message may further include the information about the area. The information about the area may be shown in Example 1, and details are not described herein again. The information about the area may be determined by the first access network device based on the fourth message from the LMF. For example, if the fourth message sent by the LMF includes the information about the area, the first access network device may send the information about the area that is included in the fourth message to the terminal device.

Optionally, the information about the area may be determined by the first access network device. For example, the first access network device may determine information about a neighboring first access network device, and the first access network device may determine a cell managed by the first access network device and a cell managed by the neighboring first access network device as one area. Alternatively, the first access network device may determine information about a cell on which the terminal device currently camps, and the first access network device may obtain neighboring cell information of the cell, and determine the cell and a neighboring cell as one area. The first access network device may use an identifier of the cell, geographical location information of the cell, or the like as the information about the cell.

It should be noted that the information about the area may be a cell list, an identifier of the area, or other information that may indicate an area. Related descriptions may be shown in Example 1, and details are not described herein again.

Optionally, the RRC release message or the RRC reconfiguration message may further include the information about the time that is shown in Example 2. The information about the time may be determined based on the fourth message from the LMF. For example, if the fourth message sent by the LMF includes the information about the time, the first access network device may send the information about the time that is included in the fourth message to the terminal device. Alternatively, the information about the time may be determined by the first access network device.

Optionally, the RRC release message may further include a first identifier. The first identifier herein may be a routing identifier (routing ID), and the first identifier may identify the LMF.

In a possible implementation, the first access network device may send, to the LMF, the SRS configuration information configured for the terminal device. The first access network device may add the SRS configuration information of the terminal device to a positioning information response (positioning information response) message. The first access network device may further send the SRS configuration information to another first access network device in the area. Optionally, the SRS configuration information may alternatively be sent by the LMF to another first access network device. After receiving the SRS configuration information from the first access network device, the LMF may send the SRS configuration information to another first access network device in the area. After receiving the SRS configuration information, the another first access network device in the area may reserve, for the terminal device, an SRS indicated by the SRS configuration information, to avoid scheduling, for another terminal device, a time domain resource and a frequency domain resource that are indicated by the SRS configuration information. For example, the time domain resource and the frequency domain resource that are indicated by the SRS configuration information may be reserved for the terminal device. If the another first access network device in the area has configured, for the another terminal device, the time domain resource and the frequency domain resource that are indicated by the SRS configuration information, the first access network device may reclaim the time domain resource and the frequency domain resource that have been configured for the another terminal device, and reserve the time domain resource and the frequency domain resource for the terminal device.

In another possible implementation, after receiving the SRS configuration information from the first access network device, the LMF may select a third access network device. The third access network device herein may be a measurement access network device that is selected by the LMF and that is configured to measure the SRS sent by the terminal device, for example, may be the foregoing first access network device, may be a second access network device in the foregoing area, or may be another access network device. The third access network device may measure the SRS sent by the terminal device. It should be understood that the third access network device may be the second access network device in the area. The LMF may send measurement request information to the selected third access network device, to request the third access network device to measure the SRS sent by the terminal device. The measurement request message may carry the SRS configuration information of the terminal device. After receiving the measurement request information from the LMF, the third access network device may measure the SRS sent by the terminal device, and send a measurement result to the LMF. The LMF may determine a location of the terminal device based on the received measurement result, to position the terminal device.

Step 203: The terminal device sends a reference signal in the area based on the reference signal configuration information.

Some or all access network devices in the area may receive the reference signal sent by the terminal device. Alternatively, some or all access network devices in the area and neighboring access network devices of the some or all access network devices may receive the reference signal sent by the terminal device. The terminal device may obtain the SRS configuration information from an RRC release message or an RRC reconfiguration message from the first access network device. The terminal device may determine a time domain resource and a frequency domain resource of the SRS based on the SRS configuration information. The terminal device may store at least one of information about an area or information about a time. For example, if the RRC release message or the RRC reconfiguration message includes the information about the area, the terminal device may store the information about the area. If the RRC release message or the RRC reconfiguration message includes the information about the time, the terminal device may store the information about the time. If the RRC release message or the RRC reconfiguration message includes the information about the area and the information about the time, the terminal device may store the information about the area and the information about the time.

The terminal device may determine, in a non-connected state based on at least one of the information about the area or the information about the time, whether to send the SRS. If the SRS can be sent, the terminal device may send the SRS on the time domain resource and the frequency domain resource of the SRS.

In a possible implementation, the terminal device may determine whether a cell on which the terminal device camps belongs to the foregoing area. If the cell on which the terminal device camps belongs to the area, the terminal device may send the SRS in a non-connected state based on the SRS configuration information. In an example, the terminal device may determine, based on a cell identifier of the cell on which the terminal device camps, whether the cell on which the terminal device camps belongs to the area. For example, the terminal device may demodulate a master information block (master information block, MIB) of the cell on which the terminal device camps, obtain a system information block (system information block, SIB) in the MIB, and read, from the SIB1, a CGI of the cell on which the terminal device camps, to determine, based on the read CGI, whether the cell on which the terminal device camps belongs to the foregoing area. Alternatively, the terminal device may read, from an SSB, a physical cell identifier (physical cell identifier, PCI) of the cell on which the terminal device camps, to determine, based on the read PCI, whether the cell on which the terminal device camps belongs to the foregoing area. Optionally, the terminal device may determine, based on the read PCI and the read CGI, whether the cell on which the terminal device camps belongs to the foregoing area.

If the information about the area includes a cell list, the terminal device may search the cell list for a cell identifier of the cell on which the terminal device camps. If the terminal device finds the cell identifier of the cell on which the terminal device camps, the terminal device may consider that the cell on which the terminal device camps belongs to the foregoing area. If the terminal device does not find, from the cell list, the cell identifier of the cell on which the terminal device camps, the terminal device may consider that the cell on which the terminal device camps does not belong to the area.

If the information about the area includes an identifier of the area, the terminal device may determine whether an identifier of an area that is broadcast by the cell on which the terminal device camps is consistent with the stored identifier of the area. If yes, the terminal device may consider that the cell on which the terminal device camps belongs to the area. If no, the terminal device may consider that the cell on which the terminal device camps does not belong to the area. The identifier of the area that is broadcast by the cell on which the terminal device camps may be an identifier of an area that is broadcast by using a system broadcast message by the access network device that manages the cell on which the terminal device camps.

Optionally, the information about the area may include an identifier of the area, and the identifier of the area may be associated with a cell list. The terminal device may determine, based on the identifier of the area, the cell list associated with the identifier of the area. The terminal device may determine, based on the cell list and a cell identifier of the cell on which the terminal device camps, whether the cell on which the terminal device camps belongs to the area.

If the cell on which the terminal device camps does not belong to the area, the terminal device may send a second message to the LMF. The second message may be used to request to update the SRS configuration information, or the second message may be used to notify the LMF that the terminal device has moved out of the area. After receiving the second message, the LMF may perform the step shown in step 201, to update the SRS configuration information for the terminal device.

In an example, the terminal device may send a non-access stratum (non access stratum, NAS) message to the first access network device. The first access network device may forward the NAS message to an AMF. The NAS message includes a long term evolution positioning protocol (long term evolution positioning protocol, LPP) protocol data unit (protocol data unit, PDU) sent by the terminal device to the LMF. The LPP PDU includes an LPP message. It should be noted that the NAS message further includes a first identifier that identifies the LMF. The first identifier may be a routing identifier (routing ID). After receiving the NAS message, the AMF may forward, based on the routing ID, the LPP PDU to the LMF identified by the routing ID.

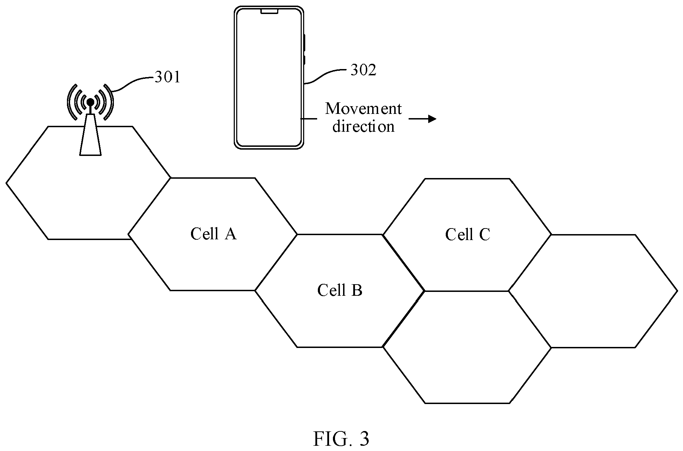

Refer to FIG. 3. A first access network device 301 sends an RRC release message to a terminal device 302, to release the terminal device 302 to a non-connected state. The RRC release message includes information about an area and at least one of SRS configuration information and second indication information. The information about the area includes a cell list, and the cell list includes a cell identifier 1, a cell identifier 2, and a cell identifier 3. The terminal device 302 camps on a cell A. The terminal device 302 may determine a time domain resource and a frequency domain resource of an SRS based on the SRS configuration information. The terminal device 302 may read a CGI of the cell A, and determine that an identifier of the cell A is the cell identifier 1. The terminal device 302 determines that the cell A is in the area. Therefore, the terminal device 302 may send the SRS in a non-connected state on the time domain resource and the frequency domain resource of the SRS. The terminal device 302 moves from the cell A to a cell B in a moving process. The terminal device 302 may read a CGI of the cell B, and determine that an identifier of the cell B is a cell identifier 4. The terminal device 302 may determine that the cell B is not in the area. Therefore, the terminal device 302 may initiate random access, and send an LPP message to an LMF, to request to update the SRS configuration information or a message for moving out of the area.

Optionally, each cell may be associated with one piece of frequency information in the information about the area. After determining that a cell on which the terminal device camps belongs to the area, the terminal device may determine whether the cell on which the terminal device camps is associated with frequency information. If the cell on which the terminal device camps is not associated with the frequency information, the terminal device may enter a connected state to request to update the SRS configuration information. If the cell on which the terminal device camps is associated with the frequency information, the terminal device may determine whether a frequency of the configured SRS meets the frequency information associated with the cell on which the terminal device camps. If the frequency of the configured SRS meets the frequency information associated with the cell on which the terminal device camps, the terminal device may send the SRS in a non-connected state. If the frequency of the configured SRS does not meet the frequency information associated with the cell on which the terminal device camps, the terminal device needs to enter a connected state to request the LMF to update the SRS configuration information.

Refer to FIG. 3. A first access network device 301 sends an RRC release message to a terminal device 302, to release the terminal device 302 to a non-connected state. The RRC release message may include information about an area and at least one of SRS configuration information and second indication information. The information about the area includes an identifier of the area, and the identifier of the area is associated with a cell list. The cell list includes a cell identifier 1, a cell identifier 2, and a cell identifier 3. The cell identifier 1 is associated with frequency information f1, the cell identifier 2 is associated with frequency information f2, and the cell identifier 3 is not associated with frequency information. The terminal device 302 may determine a time domain resource and a frequency domain resource f1 of an SRS based on the SRS configuration information. The terminal device 302 camps on a cell A. The terminal device 302 may read a CGI of the cell A, and determine that an identifier of the cell A is the cell identifier 1. The terminal device 302 may determine that the frequency information associated with the cell identifier 1 is f1, and the terminal device 302 determines that the cell A is in the area, and the frequency domain resource f1 of the SRS meets the frequency information f1 associated with the cell A. Therefore, the terminal device 302 may send the SRS in a non-connected state on the frequency domain resource f1 and the time domain resource of the SRS.

In an example, the terminal device 302 moves from the cell A to a cell B in a moving process. The terminal device 302 may read a CGI of the cell B, and determine that an identifier of the cell B is the cell identifier 2. The terminal device 302 may determine that the cell B is in the area. The terminal device 302 may further determine that the frequency information associated with the cell identifier 2 is f2. The terminal device 302 may determine that the frequency domain resource f1 of the SRS does not meet the frequency information f2 associated with the cell identifier 2. Therefore, the terminal device 302 may initiate random access, and send an LPP message to an LMF, to request to update the SRS configuration information or a message for moving out of the area.

In another example, the terminal device 302 moves from the cell A to a cell C in a moving process. The terminal device 302 may read a CGI of the cell C, and determine that an identifier of the cell C is the cell identifier 3. The terminal device 302 may determine that the cell identifier 3 is not associated with frequency information. Therefore, the terminal device 302 may initiate random access, and send an LPP message to an LMF, to request to update the SRS configuration information or indicate that the terminal device moves out of the area.

Optionally, the information about the area may include the identifier of the area. Refer to FIG. 3. A terminal device 302 may store an identifier of an area. The terminal device 302 camps on a cell A, and the terminal device 302 may receive an identifier of an area that is broadcast by an access network device that manages the cell A. If the terminal device 302 determines that the identifier of the area is the same as the identifier stored in the terminal device 302, the terminal device 302 may determine that the cell A is in the area. Therefore, the terminal device 302 may send an SRS in a non-connected state on a time-frequency resource of the SRS. The terminal device 302 moves from the cell A to a cell B in a moving process. The terminal device 302 may receive an identifier of an area that is broadcast by an access network device that manages the cell B. If the terminal device 302 determines that the identifier of the area is different from the identifier stored in the terminal device 302, the terminal device 302 may determine that the cell B is not in the area. Therefore, the terminal device 302 may initiate random access, and send an LPP message to an LMF, to request to update SRS configuration information or indicate that the terminal device moves out of the area.

Optionally, an RRC release message may further include the information about the time that is shown in Example 2. The terminal device may start timing after receiving the RRC release message, and when timing duration exceeds the foregoing time, the terminal device may send the LPP message to the LMF. The LPP message may be used to notify the LMF that timing expires, or is used to request to update the SRS configuration information.

Refer to FIG. 3. A first access network device 301 sends an RRC release message to a terminal device 302, to release the terminal device 302 to a non-connected state. The RRC release message may include a timer, information about an area, and at least one of SRS configuration information and second indication information. Timing duration of the timer is t1. The terminal device 302 may start the timer after receiving the RRC release message. The terminal device 302 camps on a cell A. The terminal device 302 may determine that the cell A is in the area, and the timer does not reach the specified duration t1. Therefore, the terminal device 302 may send an SRS in a non-connected state on a frequency domain resource f1 and a time domain resource of the SRS. For a method for determining, by the terminal device 302, whether the cell A is in the area, refer to the related descriptions in the foregoing embodiment. Details are not described herein again. The terminal device 302 moves from the cell A to a cell C in a moving process, and the terminal device 302 may determine that the cell C is in the area. However, because the terminal device 302 determines that the timer has reached the specified duration t1, the terminal device 302 may initiate random access, and send an LPP message to an LMF, to request to update the SRS configuration information or indicate that the timer expires.

The following describes the communication method provided in this application with reference to specific embodiments.

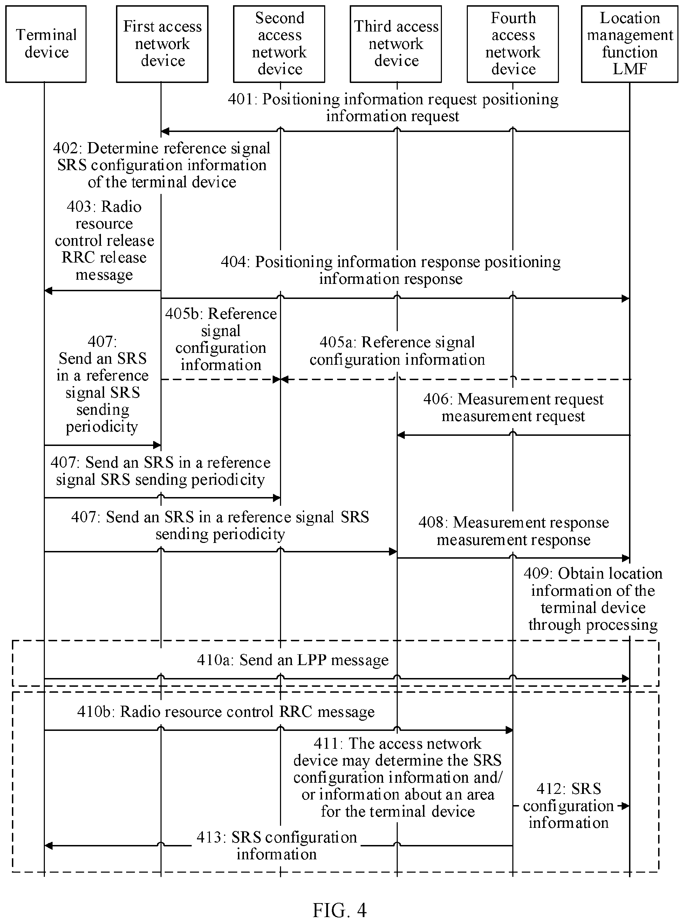

FIG. 4 is an example flowchart of a communication method according to an embodiment of this application. The method may include the following steps.

Step 401: An LMF sends a positioning information request to a first access network device.

The positioning information request may include information about an area and/or a timer. The information about the area may be shown in Example 1. For the timer, refer to the information about the time shown in Example 2. The first access network device herein may be an access network device that is providing a service for a terminal device. In addition, the positioning information request may also include first indication information. The first indication information may indicate that the terminal device has a capability of sending an SRS in a non-connected state, or the first indication information may indicate to configure a reference signal sent by the terminal device in a non-connected state.

Step 402: The first access network device determines SRS configuration information of the terminal device.

The first access network device may release the terminal device to a non-connected state. For example, the first access network device may determine to release the terminal device to a non-connected state when the terminal device has no data service within a specific time. Alternatively, the first access network device may release the terminal device to a non-connected state based on the first indication information. It should be understood that the first access network device may release the terminal device to a non-connected state in step 403.

Step 403: The first access network device sends an RRC release message to the terminal device.

The RRC release message herein may include information about an area and/or a timer. Optionally, the RRC release message may further include at least one of a routing ID, second indication information, and the SRS configuration information. For descriptions of the routing ID and the second indication information, refer to the related descriptions in the method embodiment shown in FIG. 2.

It should be noted that, if the RRC release message carries the second indication information, after step 402 and before step 403, the first access network device may send the SRS configuration information to the terminal device by using an RRC message, for example, may send the SRS configuration information to the terminal device by using an RRC reconfiguration message

Step 404: The first access network device sends a positioning information response to the LMF.

The positioning information response may include the SRS configuration information of the terminal device. It should be understood that there is no fixed sequence between step 403 and step 404. The first access network device may perform step 403 before step 404, or may perform step 404 before step 403, or may simultaneously perform step 403 and step 404.

Step 405a: The LMF sends the SRS configuration information to a second access network device in the area.

Step 405b: The first access network device sends the SRS configuration information to a second access network device in the area.

It should be noted that only one of step 405a and step 405b may be performed. For example, step 405a may be performed, or step 405b may be performed.

Step 406: The LMF selects a third access network device, and sends a measurement request measurement request to the third access network device.

The third access network device herein may be a measurement access network device that is selected by the LMF and that is configured to measure the SRS sent by the terminal device, for example, may be the foregoing first access network device, may be the second access network device in the foregoing area, or may be another access network device. The measurement request may include the SRS configuration information of the terminal device.

In a design, the LMF may simultaneously perform step 405a and step 406. For example, the LMF may send the SRS configuration information to a second access network device in the area by using a measurement request message, without independently performing 405a.

Step 407: The terminal device sends the SRS in an SRS sending periodicity based on the SRS configuration information.

The terminal device may determine whether a cell on which the terminal device camps exceeds the area and/or whether the timer expires, and send the SRS in the SRS sending periodicity when the cell on which the terminal device camps does not exceed the area and/or the timer does not expire.

The terminal device may send the SRS on a frequency domain resource of the SRS in the SRS sending periodicity based on the SRS configuration information.

Step 408: The third access network device measures the SRS sent by the terminal device, and sends a measurement response to the LMF.

The third access network device herein may be a measurement access network device that is selected by the LMF and that is configured to measure the SRS sent by the terminal device, for example, may be the foregoing first access network device, may be the second access network device in the foregoing area, or may be another access network device.

The measurement response may carry a measurement result of the SRS, for example, may carry a signal to interference plus noise ratio (signal to interference plus noise ratio, SINR), reference signal received power (reference signal receiving power, RSRP) and/or reference signal received quality (reference signal receiving quality, RSRQ), or a relative time of arrival (relative time of arrival, RTOA) of the SRS, or an angle of arrival (angle of arrival, AOA) of the SRS.

Step 409: The LMF obtains location information of the terminal device through processing based on the measurement result.

The LMF may calculate the location information of the terminal device by using an uplink angle of arrival (uplink arrival of arrival, UL-AOA) positioning technology or an uplink time difference of arrival (uplink time difference of arrival, UL-TDOA) positioning technology. It should be noted that the LMF may alternatively determine the location information of the terminal device by using another positioning technology. This is not specifically limited in this application.

Optionally, if the cell on which the terminal device camps exceeds the area and/or the timer expires, the terminal device may perform step 410a.

Step 410a: The terminal device sends an LPP message to the LMF.

The terminal device may indicate, to the LMF by using the LPP message, that the terminal device has moved out of the area, or may request to update the SRS configuration information, or may indicate that the timer expires. The terminal device may initiate random access, and send an RRC message to a fourth access network device on which the terminal device camps. The RRC message herein may include a NAS message sent to an AMF and a routing ID. The NAS message may include an LPP PDU. The LPP PDU includes the LPP message sent to the LMF. The AMF may forward the LPP message included in the LPP PDU to the corresponding LMF based on the routing ID. The LPP message may be used to request to update the SRS configuration information for the terminal device, or may indicate that the terminal device moves out of the area, or may indicate that the timer expires.

In a possible implementation, after receiving the LPP message, the LMF may send a message to some or all access network devices in the foregoing area, to indicate the access network device to release an SRS resource, or indicate that a resource does not need to be reserved for the terminal device. Optionally, the message may include the SRS configuration information. An SRS resource indicated by the SRS configuration information is an SRS resource that needs to be released, or may be an SRS resource that does not need to be reserved for the terminal device.

After receiving the LPP message, the LMF may return to perform step 401. Based on this, step 401 to step 410a may be repeated, so that the terminal device sends the SRS in a non-connected state in the area.

It should be understood that, in step 410a, the terminal device requests the LMF to update the SRS configuration information and/or the information about the area. Optionally, the terminal device may alternatively request the fourth access network device to update the SRS configuration information and/or the information about the area. The terminal device and the access network device may perform step 410b to step 413.

Step 410b: The terminal device initiates random access, and sends an RRC message to a fourth access network device on which the terminal device camps, where the message is used to request the fourth access network device to update the SRS configuration information and/or the information about the area. Optionally, the RRC message may further include a cause, and the cause may indicate to request to update the SRS configuration information and/or the information about the area. Optionally, the RRC message may further include a routing ID.

Step 411: The fourth access network device may determine the SRS configuration information and/or the information about the area for the terminal device.

Optionally, the fourth access network device may further determine the timer for the terminal device. For a method for determining the SRS configuration information and/or the information about the area by the fourth access network device, refer to the related descriptions in step 402 and step 403. Optionally, for a method for determining the timer by the fourth access network device, refer to the related descriptions in step 402 and step 403. Details are not described herein again.

Step 412: The fourth access network device sends the SRS configuration information to the LMF.

For example, the fourth access network device may send the SRS configuration information to the LMF by using a positioning information update message, or may send the SRS configuration information to the LMF by using another message. This is not specifically limited in this application.

Step 413: The fourth access network device sends the SRS configuration information to the terminal device.

The fourth access network device may further send the information about the area and/or the timer to the terminal device. For a method for sending the SRS configuration information to the terminal device by the fourth access network device, refer to the related descriptions in step 402 and step 403. For a method for sending the information about the area and/or the timer to the terminal device by the fourth access network device, refer to the related descriptions in step 402 and step 403. Details are not described herein again.

It should be noted that step 412 may be performed before step 413, or step 413 may be performed before step 412, or step 413 and step 412 may be performed simultaneously. This is not specifically limited in this application.

Based on step 401 to step 409 and step 410b to step 413, the terminal device may also send the SRS in a non-connected state in the area. In the embodiment shown in FIG. 4, the information about the area is determined by the LMF and sent to the first access network device. It should be understood that, in this embodiment of this application, all the steps shown in FIG. 4 may be performed, or a person skilled in the art may select some steps from the steps shown in FIG. 4 to perform, to constitute a complete embodiment.

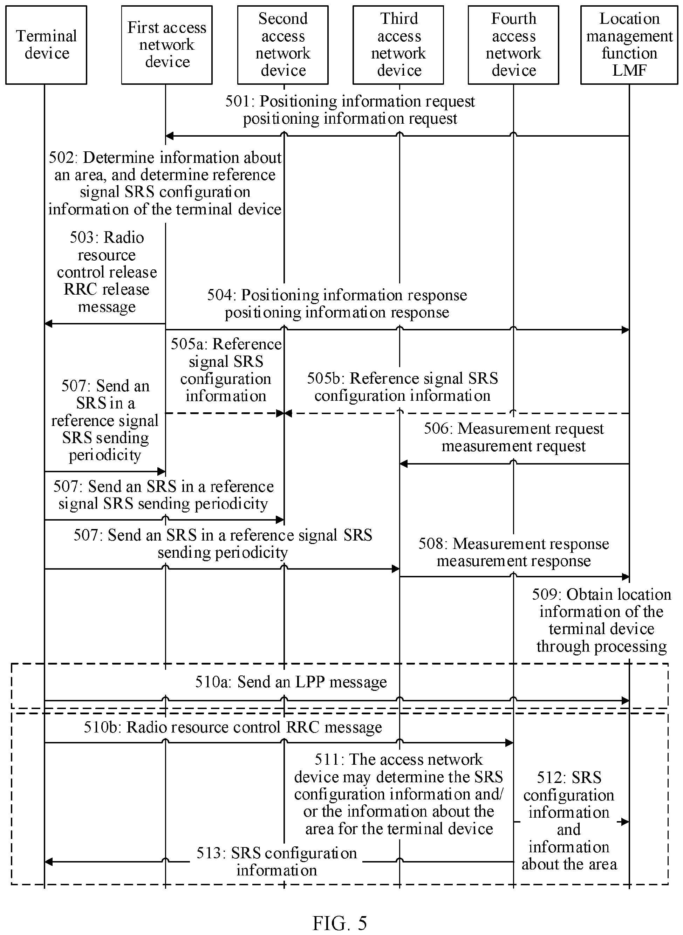

FIG. 5 is an example flowchart of a communication method according to an embodiment of this application. The method may include the following steps.

Step 501: An LMF sends a positioning information request to a first access network device.

The first access network device herein may be an access network device that is providing a service for a terminal device. In addition, the positioning information request may include first indication information. The first indication information may indicate that the terminal device has a capability of sending an SRS in a non-connected state, or the first indication information may indicate to configure a reference signal sent by the terminal device in a non-connected state.

Step 502: The first access network device determines information about an area, and determines SRS configuration information of the terminal device.

The first access network device may release the terminal device to a non-connected state. For example, the first access network device may determine to release the terminal device to a non-connected state when the terminal device has no data service within a specific time. Alternatively, the first access network device may release the terminal device to a non-connected state based on the first indication information. It should be understood that the first access network device may release the terminal device to a non-connected state in step 503.

Step 503: The first access network device sends an RRC release message to the terminal device.

The RRC release message herein may include the information about the area and/or a timer. The information about the area and the timer may be determined by the first access network device. For details, refer to the related descriptions in the method embodiment shown in FIG. 2. Details are not described herein again. Optionally, the RRC release message may further include at least one of a routing ID, second indication information, and the SRS configuration information. For descriptions of the routing ID and the second indication information, refer to the related descriptions in the method embodiment shown in FIG. 2.

It should be noted that, if the RRC release message carries the second indication information, after step 502 and before step 503, the first access network device may send the SRS configuration information to the terminal device by using an RRC message, for example, may send the SRS configuration information to the terminal device by using an RRC reconfiguration message

Step 504: The first access network device sends a positioning information response to the LMF.

The positioning information response may include the SRS configuration information of the terminal device and the information about the area. For the information about the area herein, refer to Example 1. The information about the area is determined by the first access network device. It should be understood that there is no fixed sequence between step 503 and step 504. The first access network device may perform step 503 before step 504, or may perform step 504 before step 503, or may simultaneously perform step 503 and step 504.

Step 505a: The LMF sends the SRS configuration information to a second access network device in the area.

Step 505b: The first access network device sends the SRS configuration information to a second access network device in the area.

It should be noted that only one of step 505a and step 505b may be performed. For example, step 505a may be performed, or step 505b may be performed. If step 505a is performed, the positioning information response in step 504 includes the SRS configuration information and at least one of the information about the area and information about a time. If step 505b is performed, the positioning information response in step 504 includes the SRS configuration information.

Step 506 to step 510a may be the same as step 406 to step 410a shown in FIG. 4.

Based on this, step 501 to step 510a may be repeated, so that the terminal device sends the SRS in a non-connected state in the area.

It should be understood that, in step 510a, the terminal device requests the LMF to update the SRS configuration information and/or the information about the area. Optionally, the terminal device may alternatively request the fourth access network device on which the terminal device camps to update the SRS configuration information and/or the information about the area. The terminal device and the fourth access network device may perform step 510b to step 513.

Step 510b and step 511 may be the same as step 410b and step 411 shown in FIG. 4.

Step 512: The fourth access network device sends the SRS configuration information to the LMF.

For example, the fourth access network device may send the SRS configuration information to the LMF by using a positioning information update message, or may send the SRS configuration information to the LMF by using another message. This is not specifically limited in this application. Optionally, the fourth access network device may further send the information about the area and/or the timer to the LMF. For a method for sending the SRS configuration information to the LMF by the fourth access network device, refer to step 504, step 505a, and step 505b shown in FIG. 5. Optionally, for a method for sending the information about the area and/or the timer to the LMF by the fourth access network device, refer to step 504, step 505a, and step 505b shown in FIG. 5. Details are not described herein again.

Step 513: The fourth access network device sends the SRS configuration information to the terminal device.

The fourth access network device may further send the information about the area and/or the timer to the terminal device. For a method for sending the SRS configuration information to the terminal device by the fourth access network device, refer to the related descriptions in step 502 and step 503. For a method for sending the information about the area and/or the timer to the terminal device by the fourth access network device, refer to the related descriptions in step 502 and step 503. Details are not described herein again.

It should be noted that step 512 may be performed before step 513, or step 513 may be performed before step 512, or step 513 and step 512 may be performed simultaneously. This is not specifically limited in this application.

Based on this, in step 501 to step 509 and step 510b to step 513, the terminal device may send the SRS in a non-connected state in the area. In the method embodiment shown in FIG. 5, the information about the area and timing duration of the timer may be determined by the first access network device. It should be understood that, in this embodiment of this application, all the steps shown in FIG. 5 may be performed, or a person skilled in the art may select some steps from the steps shown in FIG. 5 to perform, to constitute a complete embodiment.

In this embodiment of this application, the first access network device may further configure an uplink resource for the terminal device, and the terminal device may send uplink data to the LMF in a non-connected state on the uplink resource in the area. The following provides explanations and descriptions by using the accompanying drawings.

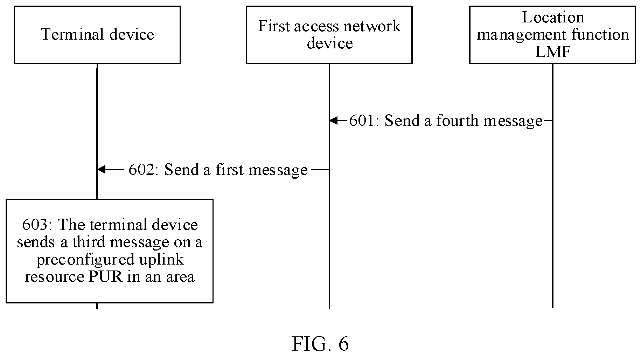

FIG. 6 is an example flowchart of a communication method according to an embodiment of this application. The method may include the following steps.

Step 601: An LMF sends a fourth message to a first access network device.

The fourth message herein may be a positioning information request (positioning information request) message or a newly defined message. The fourth message may be used to request the first access network device to configure an SRS for a terminal device, or the fourth message may be used to request reference signal configuration information of a terminal device. Optionally, the fourth message may further include one or more of Example 1 to Example 3.

### Example 1: Information about an area.

The area herein may be that the terminal device may send uplink data in a non-connected state in the area by using a configured PUR, and may not need to enter a connected state to receive PUR configuration information again when moving to another cell. The non-connected state herein may include an inactive state and an idle state. For example, if the area includes a cell 1, a cell 2, and a cell 3, the terminal device may send the uplink data in a non-connected state on the configured PUR within the cell 1, the cell 2, and the cell 3.

The area may be determined by the LMF based on a first access network device that is providing a service for the terminal device. For related descriptions, refer to the descriptions of determining the area by the LMF in the method embodiment shown in FIG. 2. In addition, for the information about the area, refer to the related descriptions in Example 1 shown in FIG. 2. Details are not described herein again.

Optionally, each cell may be associated with one piece of frequency information in the information about the area, and the terminal device may determine, based on the frequency information, whether to send the uplink data on the configured PUR in the area. For example, if a cell that is not associated with frequency information exists in cells included in the area, even if the cell that is not associated with frequency information belongs to the area, when the terminal device camps on the cell that is not associated with frequency information, the terminal device needs to enter a connected state to request a network side to update the PUR configuration information. In addition, when the terminal device camps on a cell, if the cell belongs to the foregoing area and is associated with frequency information, the terminal device may determine whether a frequency of the configured PUR meets the frequency information associated with the cell. If the frequency of the configured PUR meets the frequency information associated with the cell, the terminal device may send an uplink resource in a non-connected state on the PUR. If the frequency of the configured PUR does not meet the frequency information associated with the cell, the terminal device needs to enter a connected state to request the network side to update the PUR configuration information.

It should be noted that the information about the area may alternatively be specified in a communication protocol. The LMF may obtain information about a first access network device that is providing a service for the terminal device or information about a cell on which the terminal device currently camps, and determine, based on the information about the first access network device or the information about the cell on which the terminal device currently camps, the information about the area that is specified in the communication protocol.

### Example 2: Information about a time.

The time indicated by the information about the time herein may be a time at which the terminal device may send uplink data in a non-connected state on a configured PUR. For related descriptions of the information about the time, refer to Example 2 shown in FIG. 2. Details are not described herein again.

### Example 3: Third indication information.

The third indication information may indicate to configure a preconfigured uplink resource (preconfigured uplink resource, PUR) used when the terminal device sends uplink data in a non-connected state, or the third indication information may indicate that the terminal device has a capability of sending uplink data in a non-connected state on a PUR.

Optionally, the third indication information may be used to trigger the first access network device to release the terminal device to a non-connected state. When receiving the third indication information, the first access network device may release the terminal device to a non-connected state. The first access network device may configure, for the terminal device, the PUR used to send the uplink data in a non-connected state. The first access network device may add PUR configuration information to a first message and send the first message to the terminal device. The first message may be an RRC release message.

Optionally, the third indication information and the foregoing first indication information may be same indication information, or may be represented by a same information element.

Step 602: The first access network device sends a first message to the terminal device.

The first message may be an RRC release message. The message may include the PUR configuration information. Optionally, the message may further include other information, such as the information about the area, the information about the time, and the SRS configuration information. For details, refer to the related descriptions in the method embodiment shown in FIG. 2. To avoid repetition, details are not described herein again.

In a possible implementation, the first access network device may further send the PUR configuration information to a second access network device in the area.

Optionally, the first access network device may send the PUR configuration information configured for the terminal device to the LMF, and the LMF sends the PUR configuration information to the second access network device in the area. The first access network device may add the PUR configuration information of the terminal device to a positioning information response (positioning information response) message.

After receiving the PUR configuration information, the second access network device in the area may reserve, for the terminal device, a time domain resource and a frequency domain resource that are indicated by the PUR configuration information, to avoid scheduling, for another terminal device, the time domain resource and the frequency domain resource that are indicated by the PUR configuration information. If the second access network device in the area has configured, for the another terminal device, the time domain resource and the frequency domain resource that are indicated by the PUR configuration information, the second access network device may reclaim the time domain resource and the frequency domain resource that have been configured for the another terminal device, and reserve the time domain resource and the frequency domain resource for the terminal device.

Step 603: The terminal device sends a third message on the PUR in the area.

The third message herein may be an RRC message. The RRC message may be used to send the uplink data to the first access network device, or the RRC message may be used to send the uplink data to the LMF. Optionally, the RRC message may include a cause, and the cause may indicate a type of the uplink data, for example, positioning data (positioning data), NAS data, or terminal-initiated data (mo-data). The RRC message may further include a NAS container (container), which is used to carry a NAS message sent to an AMF. The NAS message may include an LPP PDU and a routing ID, and the LPP PDU includes an LPP message sent by the terminal device to the LMF. The AMF may forward the LPP message in the LPP PDU to the corresponding LMF based on the routing ID.

The terminal device may obtain the PUR configuration information from the first message from the first access network device. The terminal device may determine a time domain resource and a frequency domain resource of the PUR based on the PUR configuration information. Optionally, the terminal device may determine, based on the information about the area, an area in which the uplink data can be sent in a non-connected state.

The terminal device may determine whether a cell on which the terminal device camps belongs to the foregoing area. If the cell on which the terminal device camps belongs to the area, the terminal device may send the uplink data in a non-connected state based on the PUR configuration information.

Refer to FIG. 3. A first access network device 301 sends an RRC release message to a terminal device 302, to release the terminal device 302 to a non-connected state. The RRC release message includes PUR configuration information and information about an area. The information about the area includes a cell list, and the cell list includes a cell identifier 1, a cell identifier 2, and a cell identifier 3. The terminal device 302 camps on a cell A. The terminal device 302 may determine, based on the PUR configuration information, a time domain resource and a frequency domain resource for sending uplink data. The terminal device 302 may read a CGI of the cell A, and determine that an identifier of the cell A is the cell identifier 1. The terminal device 302 determines that the cell A is in the area. Therefore, the terminal device 302 may send the uplink data to an LMF in a non-connected state on a PUR. The terminal device 302 moves from the cell A to a cell B in a moving process. The terminal device 302 may read a CGI of the cell B, and determine that an identifier of the cell B is a cell identifier 4. The terminal device 302 may determine that the cell B is not in the area. Therefore, the terminal device 302 may initiate random access, and send an LPP message to the LMF, to request to update the PUR configuration information or indicate that the terminal device moves out of the area.

In a possible implementation, each cell may be associated with one piece of frequency information. After determining that a cell on which the terminal device camps belongs to the area, the terminal device may determine, based on the information about the area and the frequency information, whether the uplink data can be sent in a non-connected state on a PUR in the cell on which the terminal device camps. Refer to FIG. 3. A first access network device 301 sends an RRC release message to a terminal device 302, to release the terminal device 302 to a non-connected state. The RRC release message may include PUR configuration information and information about an area. The information about the area includes an identifier of the area, and the identifier of the area is associated with a cell list. The cell list includes a cell identifier 1, a cell identifier 2, and a cell identifier 3. The cell identifier 1 is associated with frequency information f1, the cell identifier 2 is associated with frequency information f2, and the cell identifier 3 is not associated with frequency information. The terminal device 302 may determine a time domain resource and a frequency domain resource f1 of a PUR based on the PUR configuration information. The terminal device 302 camps on a cell A. The terminal device 302 may read a CGI of the cell A, and determine that an identifier of the cell A is the cell identifier 1. The terminal device 302 may determine that the frequency information associated with the cell identifier 1 is f1, and the terminal device 302 determines that the cell A is in the area, and the frequency domain resource f1 of the PUR meets the frequency information f1 associated with the cell A. Therefore, the terminal device 302 may send uplink data in a non-connected state on the frequency domain resource f1 and the time domain resource.

In an example, the terminal device 302 moves from the cell A to a cell B in a moving process. The terminal device 302 may read a CGI of the cell B, and determine that an identifier of the cell B is the cell identifier 2. The terminal device 302 may determine that the cell B is in the area. The terminal device 302 may further determine that the frequency information associated with the cell identifier 2 is f2. The terminal device 302 may determine that the frequency domain resource f1 of the PUR does not meet the frequency information f2 associated with the cell identifier 2. Therefore, the terminal device 302 may initiate random access, and send an LPP message to an LMF, to request to update the PUR configuration information or indicate that the terminal device moves out of the area.

In another example, the terminal device 302 moves from the cell A to a cell C in a moving process. The terminal device 302 may read a CGI of the cell C, and determine that an identifier of the cell C is the cell identifier 3. The terminal device 302 may determine that the cell identifier 3 is not associated with frequency information. Therefore, the terminal device 302 may initiate random access, and send an LPP message to an LMF, to request to update the PUR configuration information or indicate that the terminal device moves out of the area.

Optionally, the information about the area may be the identifier of the area. Refer to FIG. 3. A terminal device 302 may store an identifier of an area. The terminal device 302 camps on a cell A, and the terminal device 302 may receive an identifier of an area that is broadcast by an access network device that manages the cell A. If the terminal device 302 determines that the identifier of the area is the same as the identifier stored in the terminal device 302, the terminal device 302 may determine that the cell A is in the area. Therefore, the terminal device 302 may send uplink data in a non-connected state on a time-frequency resource of a configured PUR. The terminal device 302 moves from the cell A to a cell B in a moving process. The terminal device 302 may receive an identifier of an area that is broadcast by an access network device that manages the cell B. If the terminal device 302 determines that the identifier of the area is different from the identifier stored in the terminal device 302, the terminal device 302 may determine that the cell B is not in the area. Therefore, the terminal device 302 may initiate random access, and send an LPP message to an LMF, to request to update PUR configuration information or indicate that the terminal device moves out of the area.

In another possible implementation, an RRC release message may further include information about a time. The terminal device may start timing after receiving the RRC release message, and when timing duration exceeds the foregoing time, the terminal device may send the LPP message to the LMF. The LPP message may be used to notify the LMF that timing expires, or is used to request to update the PUR configuration information. Refer to FIG. 3. A first access network device 301 sends an RRC release message to a terminal device 302, to release the terminal device 302 to a non-connected state. The RRC release message may include SRS configuration information, a timer, and information about an area. Timing duration of the timer is t1. The terminal device 302 may start the timer after receiving the RRC release message. The terminal device 302 camps on a cell A. When the terminal device 302 determines that the cell A is in the area, and the timing duration of the timer does not reach t1, the terminal device 302 may send uplink data in a non-connected state on a configured PUR. The terminal device 302 moves from the cell A to a cell C in a moving process, and the terminal device 302 may determine that the cell C is in the area. However, because the terminal device 302 determines that the timer has reached the specified duration t1, the terminal device 302 may initiate random access, and send an LPP message to an LMF, to request to update the PUR configuration information, or indicate that the terminal device moves out of the area, or indicate that the timer expires.

The following describes the communication method provided in this application with reference to specific embodiments.

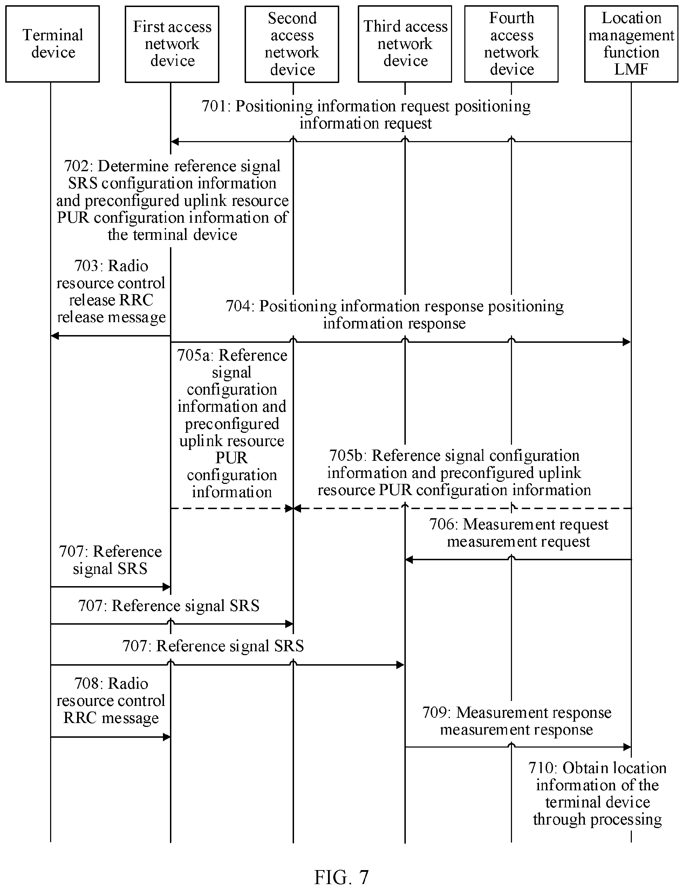

FIG. 7 is an example flowchart of a communication method according to an embodiment of this application. The method may include the following steps.

Step 701: An LMF sends a positioning information request to a first access network device.

If information about an area and/or a timer are/is determined by the LMF, the positioning information request may include the information about the area and/or the timer. For the information about the area, refer to the related descriptions shown in Example 1. For the timer, refer to the related descriptions of the information about the time shown in Example 2. The first access network device herein may be an access network device that is providing a service for a terminal device. In addition, the positioning information request may also include third indication information, and the third indication information may indicate to configure a PUR for the terminal device. Optionally, the third indication information may further have a function of the foregoing first indication information. For example, the third indication information may indicate to configure a PUR for the terminal device, and indicate to configure, for the terminal device, an SRS sent in a non-connected state.

Step 702: The first access network device determines SRS configuration information and PUR configuration information of the terminal device.

The first access network device may configure, for the terminal device based on the third indication information or the first indication information, the SRS sent in a non-connected state, and configure, for the terminal device based on the third indication information, the PUR used when the terminal device sends uplink data in a non-connected state. Optionally, the first access network device may determine to release the terminal device to a non-connected state. For example, the first access network device may determine to release the terminal device to a non-connected state when the terminal device has no data service within a specific time. Alternatively, the first access network device may release the terminal device to a non-connected state based on the third indication information or the first indication information. It should be understood that the first access network device may release the terminal device to a non-connected state in step 703.

Step 703: The first access network device sends an RRC release message to the terminal device.

The RRC release message herein may include the PUR configuration information and at least one of the information about the area and the timer. Optionally, the RRC release message may further include at least one of a routing ID, the SRS configuration information, and second indication information. The information about the area and the timer may be set by the first access network device, or may be sent by the LMF to the first access network device. For descriptions of the routing ID and the second indication information, refer to the related descriptions in the method embodiment shown in FIG. 2.

It should be noted that, if the RRC release message carries the second indication information, after step 702 and before step 703, the first access network device may send the SRS configuration information to the terminal device by using an RRC message, for example, may send the SRS configuration information to the terminal device by using an RRC reconfiguration message

Step 704: The first access network device sends a positioning information response to the LMF.

The positioning information response may include the SRS configuration information of the terminal device. Optionally, the positioning information response may further include the PUR configuration information. It should be understood that there is no fixed sequence between step 703 and step 704. The first access network device may perform step 703 before step 704, or may perform step 704 before step 703, or may simultaneously perform step 703 and step 704.

Step 705a: The LMF sends the SRS configuration information and/or the PUR configuration information to a second access network device in the area.

In an example, it is assumed that the timer and/or the information about the area are/is determined by the LMF. In this case, if the LMF sends the SRS configuration information to the second access network device in step 705a, the positioning information response in step 704 may include the SRS configuration information. If the LMF sends the SRS configuration information and the PUR configuration information to the second access network device in step 705a, the positioning information response in step 704 may include the SRS configuration information and the PUR configuration information. If the LMF sends the PUR configuration information to the second access network device in step 705a, the positioning information response in step 704 may include the SRS configuration information and the PUR configuration information. The SRS configuration information is used by the LMF when the LMF initiates a measurement request measurement request.

In another example, it is assumed that the timer and/or the information about the area are/is determined by the first access network device. In this case, if the LMF sends the SRS configuration information to the second access network device in step 705a, the positioning information response in step 704 may include the SRS configuration information, and at least one of the timer and the information about the area that are determined by the first access network device. If the LMF sends the SRS configuration information and the PUR configuration information to the second access network device in step 705a, the positioning information response in step 704 may include the SRS configuration information, the PUR configuration information, and at least one of the timer and the information about the area that are determined by the first access network device. If the LMF sends the PUR configuration information to the second access network device in step 705a, the positioning information response in step 704 may include the SRS configuration information, the PUR configuration information, and at least one of the timer and the information about the area that are determined by the first access network device.

Step 705b: The first access network device sends the SRS configuration information and/or the PUR configuration information to a second access network device in the area.

In an example, it is assumed that the timer and/or the information about the area are/is determined by the LMF. In this case, if the LMF sends the SRS configuration information to the second access network device in step 705b, the LMF sends the PUR configuration information to the second access network device in step 705a. The positioning information response in step 704 may include the SRS configuration information and the PUR configuration information. The SRS configuration information is used when the LMF sends a measurement request. If the first access network device sends the SRS configuration information and the PUR configuration information to the second access network device in step 705b, step 705a may not be performed. The positioning information response in step 704 may include the SRS configuration information. The SRS configuration information is used when the LMF sends a measurement request. If the first access network device sends the PUR configuration information to the second access network device in step 705b, the LMF sends the SRS configuration information to the second access network device in step 705a. The positioning information response in step 704 may include the SRS configuration information.

In another example, it is assumed that the timer and/or the information about the area are/is determined by the first access network device. In this case, if the first access network device sends the SRS configuration information to the second access network device in step 705b, the LMF sends the PUR configuration information to the second access network device in step 705a. The positioning information response in step 704 may include the timer and/or the information about the area that are/is determined by the first access network device, the SRS configuration information, and the PUR configuration information. The SRS configuration information is used when the LMF sends a measurement request. If the first access network device sends the SRS configuration information and the PUR configuration information to the second access network device in step 705b, step 705a may not be performed. The positioning information response in step 704 may include the timer and/or the information about the area that are/is determined by the first access network device, and the SRS configuration information. The SRS configuration information is used when the LMF sends a measurement request. If the first access network device sends the PUR configuration information to the second access network device in step 705b, the LMF sends the SRS configuration information to the second access network device in step 705a. The positioning information response in step 704 may include the timer and/or the information about the area that are/is determined by the first access network device, and the SRS configuration information.

Step 706: The LMF selects a third access network device, and sends a measurement request measurement request to the third access network device.

The third access network device herein may be a measurement access network device that is selected by the LMF and that is configured to measure the SRS sent by the terminal device, for example, may be the foregoing first access network device, may be the second access network device in the foregoing area, or may be another access network device. The measurement request may include the SRS configuration information of the terminal device.

In a design, the LMF may simultaneously perform step 705a and step 706. The LMF may send the SRS configuration information and/or the PUR configuration information to a second access network device in the area by using a measurement request message.

Step 707: The terminal device sends the SRS based on the SRS configuration information.

The terminal device may determine whether a cell on which the terminal device camps exceeds the area and/or whether the timer expires, and send, based on the SRS configuration information, the SRS in an SRS sending periodicity when the cell on which the terminal device camps does not exceed the area and/or the timer does not expire.

Step 708: The terminal device sends an RRC message on the PUR.

When the terminal device needs to send the uplink data, the terminal device may determine whether the cell on which the terminal device camps exceeds the area and/or whether the timer expires. When the cell on which the terminal device camps does not exceed the area and/or the timer does not expire, the terminal device may send the RRC message. The RRC message herein includes a NAS message. Optionally, the RRC message may further include a cause. The NAS message includes an LPP PDU and a routing ID. The LPP PDU includes an LPP message sent to the LMF. The LPP message includes the uplink data. The first access network device may forward the NAS message to an AMF, and the AMF may forward, to the LMF based on the routing ID, the LPP message included in the LPP PDU. The cause may indicate a type of the uplink data. For related descriptions, refer to the embodiment shown in FIG. 6. Details are not described herein again.

It should be understood that step 708 may be performed after step 703, and an execution sequence of step 708 and other steps after step 703 is not limited.

Step 709: The third access network device measures the SRS sent by the terminal device, and sends a measurement response to the LMF.

The measurement response may carry a measurement result of the SRS, for example, may carry a signal to interference plus noise ratio (signal to interference plus noise ratio, SINR), reference signal received power (reference signal receiving power, RSRP) and/or reference signal received quality (reference signal receiving quality, RSRQ), or a relative time of arrival (relative time of arrival, RTOA) of the SRS, or an angle of arrival (angle of arrival, AOA) of the SRS.

Step 710: The LMF obtains location information of the terminal device through processing based on the measurement result and the uplink data.

The LMF may calculate the location information of the terminal device by using an uplink angle of arrival (uplink arrival of arrival, UL-AOA) positioning technology or an uplink time difference of arrival (uplink time difference of arrival, UL-TDOA) positioning technology. It should be understood that the LMF may alternatively calculate the location information of the terminal device by using another positioning technology. This is not specifically limited in this application. It should be understood that, in this embodiment of this application, all the steps shown in FIG. 7 may be performed, or a person skilled in the art may select some steps from the steps shown in FIG. 7 to perform, to constitute a complete embodiment.

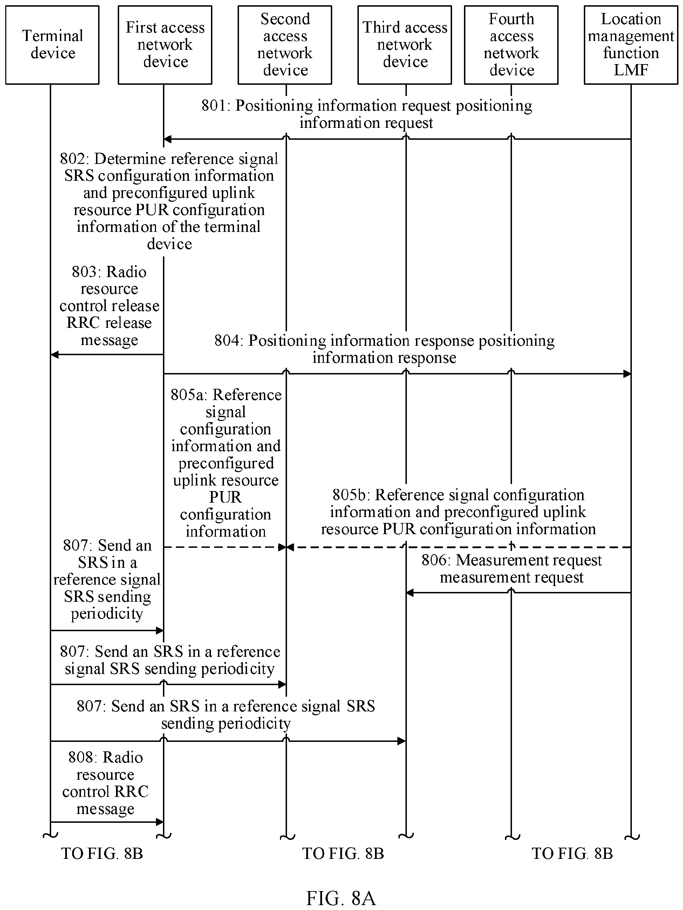

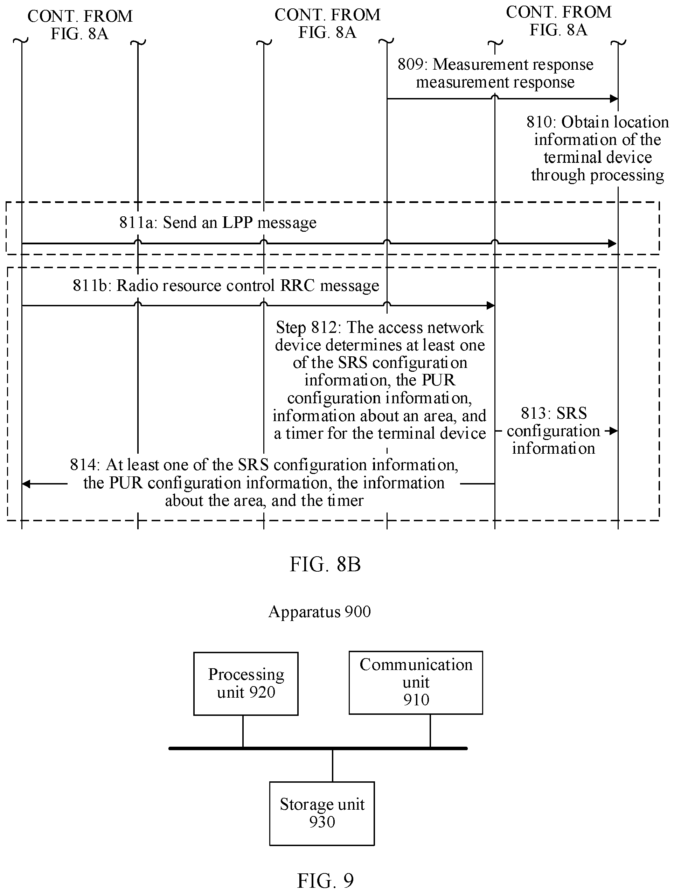

FIG. 8A and FIG. 8B are an example flowchart of a communication method according to an embodiment of this application. The method may include the following steps.

Step 801 to step 810 may be the same as step 701 to step 710 shown in FIG. 7.

Optionally, if the cell on which the terminal device camps exceeds the area and/or the timer expires, the terminal device may perform step 811a.

Step 811a: The terminal device sends an LPP message to the LMF.

The terminal device may indicate, to the LMF by using the LPP message, that the terminal device has moved out of the area, or may indicate that the timer expires, or may request to update the SRS configuration information or the PUR configuration information. The terminal device may initiate random access, and send an RRC message to a fourth access network device on which the terminal device camps. The RRC message herein may include a NAS message sent to an AMF and a routing ID. The NAS message may include an LPP PDU. The LPP PDU includes the LPP message sent to the LMF. The AMF may forward the LPP message in the LPP PDU to the corresponding LMF based on the routing ID.

In a possible implementation, after receiving the LPP message, the LMF may send a message to some or all access network devices in the foregoing area, to indicate the access network device to release an SRS resource, or indicate that a resource does not need to be reserved for the terminal device. Optionally, the message may include the SRS configuration information. An SRS resource indicated by the SRS configuration information is an SRS resource that needs to be released, or may be an SRS resource that does not need to be reserved for the terminal device.

After receiving the LPP message, the LMF may return to perform step 801. Based on this, step 801 to step 811a may be repeated, so that the terminal device sends the SRS and the uplink data in a non-connected state in the area.

It should be understood that, in step 811a, the terminal device requests the LMF to update at least one of the SRS configuration information, the PUR configuration information, and the information about the area. Optionally, the terminal device may alternatively request the fourth access network device to update at least one of the SRS configuration information, the PUR configuration information, and the information about the area. The terminal device and the access network device may perform step 811b to step 814.

Step 811b: The terminal device initiates random access, and sends an RRC message to a fourth access network device on which the terminal device camps, where the message is used to request the fourth access network device to update at least one of the SRS configuration information, the PUR configuration information, and the information about the area. Optionally, the RRC message may further include a cause, and the cause may indicate to request to update at least one of the SRS configuration information, the PUR configuration information, and the information about the area. Optionally, the RRC message may further include a routing ID.

Step 812: The fourth access network device may determine at least one of the SRS configuration information, the PUR configuration information, the information about the area, and the timer for the terminal device.

For a method for determining at least one of the SRS configuration information, the PUR configuration information, the information about the area, and the timer by the fourth access network device, refer to the related descriptions in step 702 and step 703 shown in FIG. 7. Details are not described herein again.

Step 813: The fourth access network device sends the SRS configuration information to the LMF.

For example, the fourth access network device may send the SRS configuration information to the LMF by using a positioning information update message, or may send the SRS configuration information to the LMF by using another message. This is not specifically limited in this application. Optionally, the foregoing message may be further used to send the PUR configuration information and/or the information about the area to the LMF. For a case in which the fourth access network device sends at least one of the SRS configuration information, the PUR configuration information, and the information about the area to the LMF by using the foregoing message, refer to step 704, step 705a, and step 705b shown in FIG. 7. Details are not described herein again.

Step 814: The fourth access network device sends at least one of the SRS configuration information, the PUR configuration information, the information about the area, and the timer to the terminal device.

For a method for sending at least one of the SRS configuration information, the PUR configuration information, the information about the area, and the timer to the terminal device by the fourth access network device, refer to the related descriptions in step 702 and step 703 shown in FIG. 7. Details are not described herein again.

It should be noted that step 813 may be performed before step 814, or step 814 may be performed before step 813, or step 813 and step 814 may be performed simultaneously. This is not specifically limited in this application.

Based on this, in step 801 to step 810 and step 811b to step 814, the terminal device may send the SRS and the uplink data in a non-connected state in the area. It should be understood that, in this embodiment of this application, all the steps shown in FIG. 8A and FIG. 8B may be performed, or a person skilled in the art may select some steps from the steps shown in FIG. 8A and FIG. 8B to perform, to constitute a complete embodiment.Based on a same technical concept as the foregoing communication method, as shown in FIG. 9, an apparatus 900 with a communication function is provided. The apparatus 900 can perform the steps performed by the terminal device, the access network device, or the LMF in the foregoing method. To avoid repetition, details are not described herein again. The apparatus 900 includes a communication unit 910 and a processing unit 920. Optionally, the apparatus 900 further includes a storage unit 930. The storage unit 930 may be inside the apparatus 900, or the storage unit 930 may be outside the apparatus 900. The processing unit 920 may be integrated with the storage unit 930. The communication unit 910 may also be referred to as a transceiver, a transceiver apparatus, or the like. The processing unit 920 may also be referred to as a processor, a processing board, a processing module, a processing apparatus, or the like. Optionally, a component that is in the communication unit 910 and that is configured to implement a receiving function may be considered as a receiving unit, and a component that is in the communication unit 910 and that is configured to implement a sending function may be considered as a sending unit. That is, the communication unit 910 includes the receiving unit and the sending unit. The communication unit sometimes may also be referred to as a transceiver, a transceiver circuit, or the like. The receiving unit sometimes may also be referred to as a receiver, a receiver circuit, or the like. The sending unit sometimes may also be referred to as a transmitter, a transmitter circuit, or the like.

It should be understood that the communication unit 910 is configured to perform a sending operation and a receiving operation on a terminal device side, an access network device side, or an LMF side in the foregoing method embodiment. The processing unit 920 is configured to perform other operations on the terminal device, the access network device, or the LMF in the foregoing method embodiment than the sending and receiving operations.

For example, in an implementation, the communication unit 910 is configured to: perform a sending operation on the LMF side or a receiving operation on the access network device side in step 201 in FIG. 2, and perform a sending operation on the access network device side or a receiving operation on the terminal device side in step 202 in FIG. 2, and/or the communication unit 910 is further configured to perform other receiving and sending steps on the terminal device side, the network device side, or the LMF side in embodiments of this application. The processing unit 920 is configured to perform a processing step on the terminal device side in step 203 in FIG. 2, and/or the processing unit 920 is configured to perform another processing step on the terminal device side, the network device side, or the LMF side in embodiments of this application.

The storage unit 930 is configured to store a computer program.

For example, when the apparatus 900 performs the steps performed by the terminal device in the foregoing method, the communication unit 910 is configured to receive, from an access network device, reference signal configuration information and information about an area that are configured for the apparatus. The processing unit 920 is configured to determine whether the apparatus is in the area. The communication unit 910 is further configured to send a reference signal in the area based on the reference signal configuration information. For related descriptions of the reference signal configuration information and the information about the area, refer to the method embodiment shown in FIG. 2. Details are not described herein again.

In a design, the information about the area includes an identifier of the area or information about at least one cell. For the identifier of the area or the information about the at least one cell, refer to the method embodiment shown in FIG. 2.

In a design, when determining whether the apparatus is in the area, the processing unit 920 is specifically configured to determine whether a cell on which the apparatus camps is in the area. When sending the reference signal in the area based on the reference signal configuration information, the communication unit 910 is specifically configured to: if the cell on which the apparatus camps is in the area, send the reference signal based on the reference signal configuration information. For a method for determining whether the cell on which the apparatus camps is in the area, refer to the related descriptions of the method embodiment shown in FIG. 2.

In a design, when determining whether the apparatus is in the area, the processing unit 920 is specifically configured to determine whether the cell on which the apparatus camps is in the area. When sending the reference signal in the area based on the reference signal configuration information, the communication unit 910 is specifically configured to: if the cell on which the apparatus camps is not in the area, send a second message to a location management function LMF. The second message is used to notify the LMF that the apparatus moves out of the area, or the second message is used to request to update the reference signal configuration information. For related descriptions of the second message, refer to the method embodiment shown in FIG. 2. Details are not described herein again.

In a design, the communication unit 910 is further configured to receive information about a time from the access network device. The processing unit 920 is further configured to start timing after the communication unit 910 receives the information about the time. The communication unit 910 is further configured to: if timing duration does not exceed the time, send the reference signal based on the reference signal configuration information; or if the timing duration exceeds the time, send a second message to an LMF. The second message is used to notify the LMF that timing expires, or the second message is used to request to update the reference signal configuration information. For related descriptions of the information about the time, refer to the method embodiment shown in FIG. 2. Details are not described herein again.

In a design, the communication unit 910 is further configured to receive, from the access network device, uplink resource configuration information configured for the apparatus. The processing unit 920 is further configured to determine whether the apparatus is in the area. The communication unit 910 is further configured to send a third message in the area based on the uplink resource configuration information. The third message is used to send uplink data. For the uplink resource configuration information and the third message, refer to the related descriptions in the method embodiment shown in FIG. 2. Details are not described herein again.

In a design, the communication unit 910 is further configured to receive a first identifier from the access network device. The first identifier identifies the LMF.

For example, when the apparatus 900 performs the steps performed by the LMF in the foregoing method, the processing unit 920 is configured to generate a fourth message. The communication unit 910 is configured to send the fourth message to an access network device. The fourth message is used to request the access network device to determine reference signal configuration information for a terminal device, or is used to request reference signal configuration information of a terminal device. The fourth message includes information about an area, and the area is an area in which the terminal device sends a reference signal. For the fourth message and the information about the area, refer to the related descriptions in the method embodiment shown in FIG. 2. Details are not described herein again.

In a design, the communication unit 910 is further configured to receive the reference signal configuration information from the access network device. For the reference signal configuration information, refer to the related descriptions in the method embodiment shown in FIG. 2.

In a design, the communication unit 910 is further configured to send the reference signal configuration information to an access network device included in the area.

In a design, the fourth message is further used to request the access network device to configure an uplink resource for the terminal device. The uplink resource is used by the terminal device to send uplink data. For the uplink resource configuration information, refer to the related descriptions in the method embodiment shown in FIG. 2. Details are not described herein again.

In a design, the communication unit 910 is further configured to receive uplink resource configuration information from the access network device. The uplink resource configuration information includes information about the uplink resource configured by the access network device for the terminal device.

In a design, the communication unit 910 is further configured to send the uplink resource configuration information to the access network device in the area.

For example, when the apparatus 900 performs the steps performed by the access network device in the foregoing method, the communication unit 910 is configured to receive a fourth message from a location management function LMF. The processing unit 920 determines reference signal configuration information and information about an area of a terminal device. The communication unit 910 is further configured to send the reference signal configuration information and the information about the area to the terminal device. The area is an area in which the terminal device sends a reference signal. For descriptions of the fourth message, the reference signal configuration information, and the information about the area, refer to the related descriptions in the method embodiment shown in FIG. 2. Details are not described herein again.

In a design, the communication unit 910 is further configured to send information about a time. Duration in which the terminal device sends the reference signal in the area meets the time. For descriptions of the information about the time, refer to the related descriptions in the method embodiment shown in FIG. 2. Details are not described herein again.

In a design, the communication unit 910 is further configured to send a first identifier. The first identifier identifies the LMF.

In a design, the communication unit 910 is further configured to send the reference signal configuration information to the LMF. For descriptions of the reference signal configuration information, refer to the related descriptions in the method embodiment shown in FIG. 2. Details are not described herein again.

In a design, the communication unit 910 is further configured to send the reference signal configuration information to an access network device in the area.

In a design, the communication unit 910 is further configured to send uplink resource configuration information of the terminal device. The uplink resource configuration information is used by the terminal device to send uplink data in the area. For descriptions of the uplink resource configuration information, refer to the related descriptions in the method embodiment shown in FIG. 2. Details are not described herein again.

In a design, the communication unit 910 is further configured to send the uplink resource configuration information to the LMF.

In a design, the communication unit 910 is further configured to send the uplink resource configuration information to the access network device in the area.

When the apparatus is a chip-type apparatus or a circuit, the apparatus may include a communication unit and a processing unit. The communication unit may be an input/output circuit and/or a communication interface. The processing unit is an integrated processor, a microprocessor, or an integrated circuit. The communication unit may input data and output data, and the processing unit may determine output data based on input data. For example, when the apparatus performs an operation performed by the terminal device, the communication unit may input a first message, the processing unit may determine a reference signal, and the communication unit may output the reference signal. When the apparatus performs an operation performed by the LMF, the communication unit may output a fourth message. When the apparatus performs an operation performed by the access network device, the communication unit may input a fourth message, the processing unit may determine a first message, and the communication unit may output the first message.

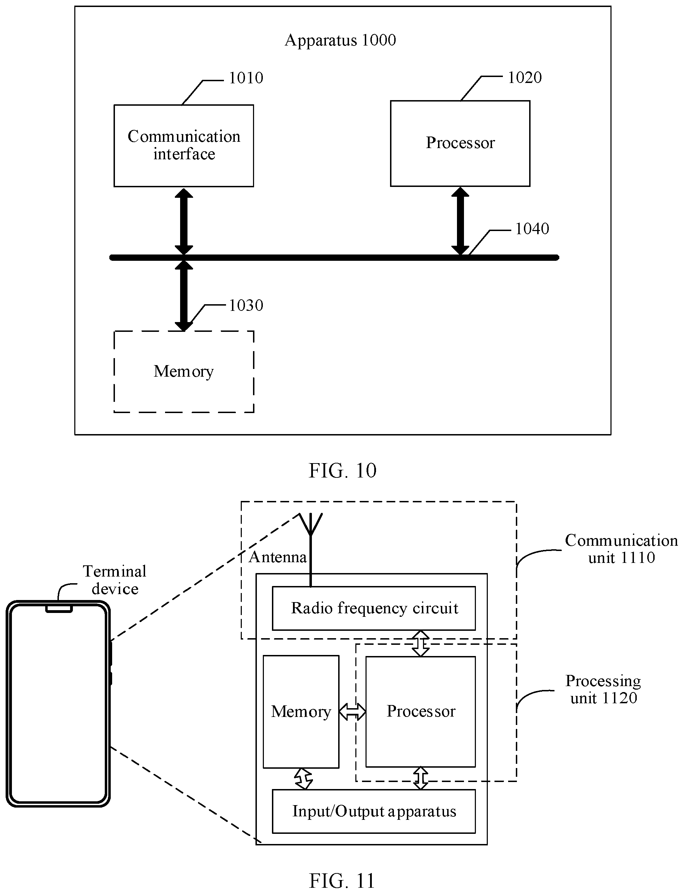

FIG. 10 shows an apparatus 1000 with a communication function according to an embodiment of this application. The apparatus 1000 is configured to implement a function of the terminal device, the access network device, or the LMF in the foregoing method. When the apparatus is configured to implement the function of the terminal device in the foregoing method, the apparatus may be the terminal device, or may be a chip with a similar function as the terminal device, or may be an apparatus that can be used with the terminal device. When the apparatus is configured to implement the function of the access network device in the foregoing method, the apparatus may be the access network device, or may be a chip with a similar function as the access network device, or may be an apparatus that can be used with the network device. When the apparatus is configured to implement the function of the LMF in the foregoing method, the apparatus may be the LMF, or may be a chip with a similar function as the LMF, or may be an apparatus that can be used with the LMF.

The apparatus 1000 includes at least one processor 1020, configured to implement the function of the terminal device, the access network device, or the LMF in the method provided in embodiments of this application. The apparatus 1000 may further include a communication interface 1010. In this embodiment of this application, the communication interface may be a transceiver, a circuit, a bus, a module, or a communication interface of another type, and is configured to communicate with another device through a transmission medium. For example, the communication interface 1010 is used by an apparatus in the apparatus 1000 to communicate with another device. The processor 1020 may implement a function of the processing unit 920 shown in FIG. 9, and the communication interface 1010 may implement a function of the communication unit 910 shown in FIG. 9.

The apparatus 1000 may further include at least one memory 1030, configured to store program instructions and/or data. The memory 1030 is coupled to the processor 1020. The coupling in this embodiment of this application may be indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

A specific connection medium between the communication interface 1010, the processor 1020, and the memory 1030 is not limited in this embodiment of this application. In this embodiment of this application, the memory 1030, the processor 1020, and the communication interface 1010 are connected through a bus 1040 in FIG. 10. The bus is indicated by using a thick line in FIG. 10. A connection manner between other components is merely an example for description, and is not limited thereto. The bus may be classified into an address bus, a data bus, a control bus, and the like. For ease of representation, only one thick line is used to represent the bus in FIG. 10, but this does not mean that there is only one bus or only one type of bus.

An embodiment of this application further provides a terminal device. The terminal device may be a terminal device, or may be a circuit. The terminal device may be configured to perform an action performed by the terminal device in the foregoing method embodiment.

FIG. 11 is a simplified schematic diagram of a structure of a terminal device. For ease of understanding and illustration, an example in which the terminal device is a mobile phone is used in FIG. 11. As shown in FIG. 11, the terminal device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal, and process the radio frequency signal. The processor may execute the software program stored in the memory, so that the terminal device performs the steps performed by the terminal device in the foregoing method embodiment. Details are not described again. The antenna is mainly configured to receive and send the radio frequency signal in a form of an electromagnetic wave. The input/output apparatus, such as a touchscreen, a display, or a keyboard, is mainly configured to receive data input by a user and output data to the user. It should be noted that terminal devices of some types may have no input/output apparatus.

When data needs to be sent, the processor performs baseband processing on the to-be-sent data, and outputs a baseband signal to the radio frequency circuit. The radio frequency circuit performs radio frequency processing on the baseband signal, and then sends a radio frequency signal through the antenna in a form of an electromagnetic wave. When data needs to be sent to the terminal device, the radio frequency circuit receives the radio frequency signal through the antenna, converts the radio frequency signal into a baseband signal, and outputs the baseband signal to the processor. The processor converts the baseband signal into data and processes the data. For ease of description, FIG. 11 shows only one memory and only one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, an antenna and a radio frequency circuit that have a transceiver function may be considered as a communication unit of the terminal device, for example, a communication unit 1110 shown in FIG. 11, and a processor that has a processing function is considered as a processing unit of the terminal device, for example, a processing unit 1120 shown in FIG. 11.

In another form of this embodiment, a computer-readable storage medium is provided. The computer-readable storage medium stores instructions. When the instructions are executed, the method performed by the terminal device, the access network device, or the LMF in the foregoing method embodiment is performed.

In another form of this embodiment, a computer program product including instructions is provided. When the instructions are executed, the method performed by the terminal device, the access network device, or the LMF in the foregoing method embodiment is performed.

In another form of this embodiment, a communication system is provided. The system may include the at least one terminal device, the at least one access network device, and the at least one LMF described above.

It should be understood that, the processor mentioned in embodiments of the present invention may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM), used as an external cache. By way of example but not limitation, RAMs in many forms are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device from an access network device, reference signal configuration information and information about an area that are configured for the terminal device; and
sending, by the terminal device, a reference signal in the area based on the reference signal configuration information.

2. The method according to claim 1, wherein the information about the area comprises an identifier of the area or information about at least one cell.

3. The method according to claim 1 or 2, wherein the sending, by the terminal device, a reference signal in the area based on the reference signal configuration information comprises:
determining, by the terminal device, whether a cell on which the terminal device camps is in the area; and
if the cell on which the terminal device camps is in the area, sending, by the terminal device, the reference signal based on the reference signal configuration information.

4. The method according to any one of claims 1 to 3, wherein the sending, by the terminal device, a reference signal in the area based on the reference signal configuration information comprises:
determining, by the terminal device, whether the cell on which the terminal device camps is in the area; and
if the cell on which the terminal device camps is not in the area, sending, by the terminal device, a second message to a location management function LMF, wherein the second message is used to notify the LMF that the terminal device moves out of the area, or the second message is used to request to update the reference signal configuration information.

5. A communication method, comprising:
sending, by a location management function LMF, a fourth message to an access network device, wherein the fourth message is used to request the access network device to determine reference signal configuration information for a terminal device, or is used to request reference signal configuration information of a terminal device; and the fourth message comprises information about an area, and the area is an area in which the terminal device sends a reference signal.

6. The method according to claim 5, wherein the information about the area comprises an identifier of the area or information about at least one cell.

7. The method according to claim 5 or 6, wherein the fourth message further comprises indication information, and the indication information indicates to configure a reference signal sent by the terminal device in a non-connected state, or the indication information indicates that the terminal device has a capability of sending a reference signal in a non-connected state.

8. A communication method, comprising:
receiving, by an access network device, a fourth message from a location management function LMF, wherein the fourth message is used to request the access network device to determine reference signal configuration information for a terminal device, or is used to request reference signal configuration information of a terminal device; and
sending, by the access network device to the terminal device, the reference signal configuration information and information about an area that are configured for the terminal device, wherein the area is an area in which the terminal device sends a reference signal.

9. The method according to claim 8, wherein the fourth message comprises the information about the area.

10. The method according to claim 8 or 9, wherein the information about the area comprises an identifier of the area or information about at least one cell.

11. The method according to any one of claims 8 to 10, further comprising:
sending, by the access network device, the reference signal configuration information to an access network device in the area.

12. A communication apparatus, comprising a processing unit and a communication unit, wherein
the processing unit is configured to determine whether the apparatus is in an area;
the communication unit is configured to receive, from an access network device, reference signal configuration information and information about the area that are configured for the terminal device; and
the communication unit is further configured to send a reference signal in the area based on the reference signal configuration information.

13. The apparatus according to claim 12, wherein the information about the area comprises an identifier of the area or information about at least one cell.

14. The apparatus according to claim 12 or 13, wherein when determining whether the apparatus is in the area, the processing unit is specifically configured to determine, by the processing unit, whether a cell on which the apparatus camps is in the area; and
when sending the reference signal in the area based on the reference signal configuration information, the communication unit is specifically configured to: if the cell on which the apparatus camps is in the area, send the reference signal based on the reference signal configuration information.

15. The apparatus according to any one of claims 12 to 14, wherein when determining whether the apparatus is in the area, the processing unit is specifically configured to determine whether the cell on which the apparatus camps is in the area; and
when sending the reference signal in the area based on the reference signal configuration information, the communication unit is specifically configured to: if the cell on which the apparatus camps is not in the area, send a second message to a location management function LMF, wherein the second message is used to notify the LMF that the terminal device moves out of the area, or the second message is used to request to update the reference signal configuration information.

16. A communication apparatus, comprising a processing unit and a communication unit, wherein
the processing unit is configured to generate a fourth message; and
the communication unit is configured to send the fourth message to an access network device, wherein the fourth message is used to request the access network device to determine reference signal configuration information for a terminal device, or is used to request reference signal configuration information of a terminal device; and the fourth message comprises information about an area, and the area is an area in which the terminal device sends a reference signal.

17. The apparatus according to claim 16, wherein the information about the area comprises an identifier of the area or information about at least one cell.

18. The apparatus according to claim 16 or 17, wherein the fourth message further comprises indication information, and the indication information indicates to configure a reference signal sent by the terminal device in a non-connected state, or the indication information indicates that the terminal device has a capability of sending a reference signal in a non-connected state.

19. A communication apparatus, comprising a processing unit and a communication unit, wherein
the communication unit is configured to receive a fourth message from a location management function LMF, wherein the fourth message is used to request the access network device to determine reference signal configuration information for a terminal device, or is used to request reference signal configuration information of a terminal device;
the processing unit is configured to determine the reference signal configuration information and information about an area of the terminal device; and
the communication unit is further configured to send the reference signal configuration information and the information about the area to the terminal device, wherein the area is an area in which the terminal device sends a reference signal.

20. The apparatus according to claim 19, wherein the fourth message comprises the information about the area.

21. The apparatus according to claim 19 or 20, wherein the information about the area comprises an identifier of the area or information about at least one cell.

22. The apparatus according to any one of claims 19 to 21, wherein the communication unit is further configured to:
send the reference signal configuration information to an access network device in the area.

23. A communication apparatus, wherein the apparatus comprises a processor and a memory, wherein
the memory is configured to store a computer program or instructions; and
the processor is configured to execute the computer program or the instructions in the memory, so that the method according to any one of claims 1 to 4, the method according to any one of claims 5 to 7, or the method according to any one of claims 8 to 11 is performed.

24. A computer-readable storage medium, wherein the computer-readable storage medium stores computer-executable instructions, and when the computer-executable instructions are invoked by a computer, the computer is enabled to perform the method according to any one of claims 1 to 4, the method according to any one of claims 5 to 7, or the method according to any one of claims 8 to 11.
